# EUROPEAN PATENT APPLICATION

(11) **EP 4 779 950 A1**
(43) Date of publication of application: **22.07.2026**
(21) Application number: 24870503.0
(22) Date of filing: 14.09.2024
(51) Int. Cl.: H04L 47/24

(54) **COMMUNICATION METHOD AND RELATED APPARATUS**

(30) Priority: 28.09.2023 CN 202311287517; 29.12.2023 CN 202311871974
(71) Applicant: HUAWEI TECHNOLOGIES CO., LTD., Shenzhen 518129 (CN)
(72) Inventor: WANG, Dan, Shenzhen, Guangdong 518129 (CN); ZHOU, Kai, Shenzhen, Guangdong 518129 (CN); LI, Hancheng, Shenzhen, Guangdong 518129 (CN); WEI, Xinpeng, Shenzhen, Guangdong 518129 (CN)
(74) Representative: Gill Jennings & Every LLP
(86) International application number: PCT/CN2024/119136
(87) International publication number: WO 2025/066959

(57) **Abstract**

This application provides a communication method and a related apparatus. The communication method includes: An AS sends a data stream, where the data stream includes at least two substreams, a first substream in the at least two substreams carries a first substream identifier, the at least two substreams correspond to a same 5-tuple, and substreams in the at least two substreams correspond to different substream identifiers. A UPF receives the data stream, and obtains the first substream identifier of the first substream from the at least two substreams included in the data stream; and maps the first substream to a first quality of service QoS flow indicated by a first QoS flow identifier QFI corresponding to the first substream identifier. According to the method, substreams in data streams corresponding to different QoS requirements can be mapped to different QoS flows by using substream identifiers of the substreams in the data streams, so that different QoS processing is performed on the substreams with the different QoS requirements, to ensure network quality of service and avoid a waste of network resources.

## Description

This application claims priorities to Chinese Patent Application No. 202311287517.9, filed with the China National Intellectual Property Administration on September 28, 2023 and entitled "COMMUNICATION METHOD AND RELATED APPARATUS", and Chinese Patent Application No. 202311871974.2, filed with the China National Intellectual Property Administration on December 29, 2023 and entitled "COMMUNICATION METHOD AND RELATED APPARATUS", both of which are incorporated herein by reference in their entireties.

### TECHNICAL FIELD

This application relates to the field of wireless local area network technologies, and in particular, to a communication method and a related apparatus.

### BACKGROUND

In scenarios such as an extended reality (extended reality, XR) game and an XR video, there may be data streams of a plurality of modalities, for example, a video stream, an audio stream, and a tactile stream. However, in data streams of a same modality, different types of data, for example, an I frame (intra-coded frame) or a P frame (predicted frame) and a base layer or an enhancement layer in the video stream, may also exist. These different data streams have different quality of service (quality of service, QoS) requirements.

In a conventional technology, when a quick user datagram protocol internet connection (quick user datagram protocol internet connection, QUIC) protocol is used, substreams in data streams in a same service are transmitted together by using a same 5-tuple. When there is no external information, it is very difficult for a UPF to identify different substreams. As a result, efficiency of a data stream processing process is low, and network resource utilization is low.

### SUMMARY

Embodiments of this application provide a communication method and a related apparatus, to map, to QoS flows corresponding to different QoS requirements, substreams in a data stream that correspond to a same 5-tuple and that correspond to the different QoS requirements, so that different QoS processing can be performed on the substreams with different QoS requirements, to ensure network quality of service and avoid a waste of network resources.

According to a first aspect, this application provides a communication method, applied to a user plane function UPF entity, including: receiving a data stream, where the data stream includes at least two substreams, the at least two substreams correspond to a same 5-tuple, and substreams in the at least two substreams correspond to different substream identifiers; obtaining a first substream identifier of a first substream from the at least two substreams included in the data stream; and mapping the first substream to a first quality of service QoS flow indicated by a first QoS flow identifier QFI corresponding to the first substream identifier.

In this embodiment of this application, based on the substream identifiers of the data stream and one or more QoS requirements corresponding to the substreams in the data stream, correspondences between the substream identifiers and QoS requirements of the substreams are obtained, and then correspondences between the substream identifiers and QFIs are obtained. Further, substreams with different QoS requirements in the data stream can be mapped, by using substream identifiers, to QoS flows indicated by different QFIs, so that corresponding QoS processing is performed on the substreams in the data stream. This process makes different QoS processing be aligned with corresponding QoS requirements, to avoid a waste of network resources that may be caused by applying high-QoS processing to a substream with a low QoS requirement, and avoid non-standard network quality of service that may be caused by applying low-QoS processing to a substream with a high QoS requirement. This improves network resource utilization and ensures network quality of service.

In a possible implementation, before mapping the first substream in the at least two substreams to a QoS flow indicated by a QoS flow identifier QFI corresponding to a substream identifier, the method further includes:
receiving a mapping rule, where the mapping rule includes a correspondence between the first substream identifier and the first QFI; and
mapping the first substream to the first quality of service QoS flow indicated by the first QoS flow identifier QFI corresponding to the first substream identifier includes: mapping, based on the mapping rule, the first substream to the first quality of service QoS flow indicated by the first QoS flow identifier QFI corresponding to the first substream identifier.

In a possible implementation, the method further includes: obtaining a second substream identifier of a second substream from the at least two substreams included in the data stream; and mapping the second substream to a second QoS flow indicated by a second QFI corresponding to the second substream identifier.

In a possible implementation, the data stream is encapsulated and transmitted based on a quick user datagram protocol internet connection QUIC protocol.

In a possible implementation, the data stream is encapsulated and transmitted based on a media over QUIC MoQ protocol.

In a possible implementation, the substream identifier is a track identifier, and the substreams in the data stream correspond to video streams, audio streams, or tactile streams in a same service when encapsulation and transmission are based on the MoQ protocol.

In a possible implementation, the substream identifier is a stream identifier, and the substreams in the data stream correspond to video streams, audio streams, or tactile streams in a same service when encapsulation and transmission are based on the QUIC protocol.

In this embodiment of this application, track identifiers or stream identifiers are used for identifying a video stream, an audio stream, and a tactile stream. Data streams of the three different modalities usually have different QoS requirements. Substreams in the data streams are mapped, based on track identifiers, to QoS flows indicated by QFIs, so that corresponding QoS processing can be performed on the data streams of the three different modalities, to effectively improve network utilization.

In a possible implementation, the substream identifier is a sequence identifier, and the substreams in the data stream correspond to data substreams obtained by mapping data sets with different importance degrees or different priorities in a same data stream.

In this embodiment of this application, sequence identifiers may be used for identifying data substreams with different sending sequences, different importance degrees, or different priorities in three data streams: a video stream, an audio stream, and a tactile stream. Further QoS requirement division can be performed on a data stream of each modality. Substreams in the data stream are mapped, based on sequence identifiers, to QoS flows indicated by QFIs, so that network utilization can be further improved, and network quality can be ensured.

In a possible implementation, the substream identifier is a data substream identifier, and the substreams in the data stream correspond to data substreams obtained by mapping data sets with different importance degrees or different priorities in different data streams.

In this embodiment of this application, because the substreams that are indicated by the data substream identifiers and that are in the data stream are in one-to-one correspondence with the QoS requirements, for a substream corresponding to each QoS requirement, data streams of a same modality or data streams of different modalities or different data substreams in data streams of a same modality can be mapped to a separate QoS flow provided that QoS requirements are different. Scheduling of each QoS flow by a receive end is performing separate QoS processing on a substream that corresponds to each QoS requirement and that is in the data stream. This can ensure network quality of service to the greatest extent.

In a possible implementation, the data substream identifier or the sequence identifier is carried in metadata of an MoQ packet including the data stream.

In this embodiment of this application, the data substream identifier or the sequence identifier is extended in the metadata of the MoQ packet, so that the data substream identifier or the sequence identifier can be obtained through decryption, and transmission security of an encrypted data payload is not affected.

In a possible implementation, when the first substream includes a plurality of data substreams obtained by mapping data sets with different importance degrees or different priorities, the first QoS flow further corresponds to a scheduling policy of the plurality of data substreams.

In a possible implementation, QoS requirements or QoS requirement identifiers of the plurality of data substreams in the first substream are encapsulated in a general packet radio service GPRS tunnel transmission protocol GTP-U header of the first QoS flow.

In a possible implementation, before obtaining a substream identifier of the first substream from the data stream, the method further includes:
receive first information, where the first information indicates that a protocol used by the data stream is the MoQ protocol and/or indicates to obtain the substream identifier.

In a possible implementation, the first information is at least one of the following: a protocol description field, a transmission indication of transmission using the MoQ protocol, an indication identifier indicating to obtain the substream identifier, a QoS parameter of a protocol data unit PDU set, or a PDU set granularity transmission indication.

According to a second aspect, an implementation of this application provides a communication method, including: receiving a policy and charging control PCC rule, where the PCC rule includes a correspondence between at least one quality of service QoS requirement and a first substream identifier of a first substream in at least two substreams in a data stream, and the first substream identifier is a substream identifier of the first substream; and sending a mapping rule, where the mapping rule is generated based on the PCC rule, the mapping rule includes a correspondence between the first substream identifier and a first QoS flow identifier QFI, and the at least one QoS requirement of the first substream corresponds to the first QFI.

In a possible implementation, the data stream is encapsulated and transmitted based on a quick user datagram protocol internet connection QUIC protocol.

In a possible implementation, the data stream is encapsulated and transmitted based on a media over QUIC MoQ protocol.

In a possible implementation, the substream identifier is a track identifier, and the substreams in the data stream correspond to video streams, audio streams, or tactile streams in a same service when encapsulation and transmission are based on the MoQ protocol.

In a possible implementation, the substream identifier is a stream identifier, and the substreams in the data stream correspond to video streams, audio streams, or tactile streams in a same service when encapsulation and transmission are based on the QUIC protocol.

In a possible implementation, the substream identifier is a sequence identifier, and the substreams in the data stream correspond to data substreams obtained by mapping data sets with different importance degrees or different priorities in a same data stream.

In a possible implementation, the substream identifier is a data substream identifier, and the substreams in the data stream correspond to data substreams obtained by mapping data sets with different importance degrees or different priorities in different data streams.

In a possible implementation, the method further includes: sending first information, where the first information indicates that a protocol used by the data stream is the MoQ protocol and/or indicates to obtain the substream identifier.

In a possible implementation, before sending first information, the method further includes: receiving second information, where the second information indicates that the protocol used by the data stream is the MoQ protocol and/or indicates to obtain the substream identifier, and the first information is generated based on the second information.

According to a third aspect, this application further provides a communication apparatus. The communication apparatus may be a user plane function UPF entity, or may be used in the UPF entity. The transmission apparatus includes a transceiver unit and a processing unit. The transceiver unit may be or may be deployed in a unit or a module that can implement an information receiving and sending function, for example, a transceiver, a transceiver antenna, or an input/output interface. The processing unit may be or may be deployed in a processor. The transceiver unit is configured to receive a data stream, where the data stream includes at least two substreams, the at least two substreams correspond to a same 5-tuple, and substreams in the at least two substreams correspond to different substream identifiers. The processing unit is configured to obtain a first substream identifier of a first substream from the at least two substreams included in the data stream. The processing unit is further configured to map the first substream to a first quality of service QoS flow indicated by a first QoS flow identifier QFI corresponding to the first substream identifier.

In a possible implementation, the transceiver unit is further configured to receive a mapping rule, where the mapping rule includes a correspondence between the first substream identifier and the first QFI. The processing unit is specifically configured to map, based on the mapping rule, the first substream to the first quality of service QoS flow indicated by the first QoS flow identifier QFI corresponding to the first substream identifier.

In a possible implementation, the processing unit is further configured to obtain a second substream identifier of the second substream from the at least two substreams included in the data stream; and map the second substream to a second QoS flow indicated by a second QFI corresponding to the second substream identifier.

In a possible implementation, the transceiver unit is further configured to receive first information, where the first information indicates that a protocol used by the data stream is an MoQ protocol and/or indicates to obtain the substream identifier.

In a possible implementation, the data stream is encapsulated and transmitted based on a quick user datagram protocol internet connection QUIC protocol.

In a possible implementation, the data stream is encapsulated and transmitted based on the media over QUIC MoQ protocol.

In a possible implementation, the substream identifier is a track identifier, and the substreams in the data stream correspond to video streams, audio streams, or tactile streams in a same service when encapsulation and transmission are based on the MoQ protocol.

In a possible implementation, the substream identifier is a stream identifier, and the substreams in the data stream correspond to video streams, audio streams, or tactile streams in a same service when encapsulation and transmission are based on the QUIC protocol.

In a possible implementation, the substream identifier is a sequence identifier, and the substreams in the data stream correspond to data substreams obtained by mapping data sets with different importance degrees or different priorities in a same data stream.

In a possible implementation, the substream identifier is a data substream identifier, and the substreams in the data stream correspond to data substreams obtained by mapping data sets with different importance degrees or different priorities in different data streams.

In a possible implementation, the data substream identifier or the sequence identifier is carried in metadata of an MoQ packet including the data stream.

In a possible implementation, when the first substream includes data substreams obtained by mapping data sets with different importance degrees or different priorities, the first QoS flow further corresponds to a scheduling policy of a plurality of data substreams.

In a possible implementation, QoS requirements or QoS requirement identifiers of the plurality of data substreams in the first substream are encapsulated in a general packet radio service GPRS tunnel transmission protocol GTP-U header of the first QoS flow.

In a possible implementation, the first information is at least one of the following: a protocol description field, a transmission indication of transmission using the MoQ protocol, an indication identifier indicating to obtain the substream identifier, a QoS parameter of a protocol data unit PDU set, or a PDU set granularity transmission indication.

According to a fourth aspect, this application further provides a communication apparatus. The communication apparatus may be a session management SMF entity, or may be used in the SMF entity. The transmission apparatus includes a transceiver unit and a processing unit. The transceiver unit may be or may be deployed in a unit or a module that can implement an information receiving and sending function, for example, a transceiver, a transceiver antenna, or an input/output interface. The processing unit may be or may be deployed in a processor. The communication apparatus includes:

a transceiver unit, configured to receive a policy and charging control PCC rule, where the PCC rule includes a correspondence between at least one quality of service QoS requirement of a substream in a data stream and a substream identifier of the substream in the data stream; and a processing unit, configured to generate a mapping rule based on the PCC rule, where the transceiver unit is further configured to send the mapping rule, where the mapping rule includes a correspondence between the substream identifier of the substream in the data stream and a QoS flow identifier QFI, and the QoS requirement corresponds to the QFI.

In a possible implementation, the transceiver unit is further configured to send first information, where the first information indicates that a protocol used by the data stream is an MoQ protocol and/or indicates to obtain the substream identifier.

In a possible implementation, the transceiver unit is further configured to receive second information, where the second information indicates that the protocol used by the data stream is the MoQ protocol and/or indicates to obtain the substream identifier, and the first information is generated based on the second information.

In a possible implementation, the data stream is encapsulated and transmitted based on a quick user datagram protocol internet connection QUIC protocol.

In a possible implementation, the data stream is encapsulated and transmitted based on the media over QUIC MoQ protocol.

In a possible implementation, the substream identifier is a track identifier, and the substreams in the data stream correspond to video streams, audio streams, or tactile streams in a same service when encapsulation and transmission are based on the MoQ protocol.

In a possible implementation, the substream identifier is a stream identifier, and the substreams in the data stream correspond to video streams, audio streams, or tactile streams in a same service when encapsulation and transmission are based on the QUIC protocol.

In a possible implementation, the substream identifier is a sequence identifier, and the substreams in the data stream correspond to data substreams obtained by mapping data sets with different importance degrees or different priorities in a same data stream.

In a possible implementation, the substream identifier is a data substream identifier, and the substreams in the data stream correspond to data substreams obtained by mapping data sets with different importance degrees or different priorities in different data streams.

In a possible implementation, the data substream identifier or the sequence identifier is carried in metadata of an MoQ packet including the data stream.

According to a fifth aspect, a communication method is provided, applied to a user plane function UPF entity. The method includes: receiving a second data stream and stream identification information corresponding to the second data stream, where the stream identification information is used for identifying the second data stream, and the stream identification information is information carried based on a media over QUIC MoQ protocol or information carried in a tunneling protocol; and mapping the second data stream to a QoS flow based on the stream identification information.

In this embodiment of this application, for the stream identification information that is sent by an AF and that is used for identifying the second data stream, the UPF maps the corresponding second data stream to one QoS flow based on the stream identification information, so that a RAN schedules the second data stream identified by each stream identification information, to ensure scheduling orderliness and efficiency.

In a possible implementation, the second data stream includes one or more substreams, the one or more substreams correspond to a same IP 5-tuple, and each substream corresponds to one piece of stream identification information; and mapping the second data stream to the QoS flow based on the stream identification information includes: mapping each substream to the QoS flow based on the stream identification information corresponding to the substream.

In this embodiment of this application, the stream identification information of the second data stream may be a single piece of stream identification information, or may be a plurality of pieces of stream identification information (when the second data stream corresponds to a plurality of substreams). The UPF maps, based on the stream identification information, the substreams to QoS flows corresponding to stream identifiers, so that orderliness of scheduling the QoS flows by the RAN can be further improved.

In a possible implementation, before mapping the second data stream to the QoS flow, the method further includes: receiving a first rule, where the first rule includes the stream identification information and a QFI corresponding to the stream identification information; and mapping the second data stream to the QoS flow based on the stream identification information includes: mapping, based on the first rule, the second data stream to the QoS flow indicated by the QFI corresponding to the stream identification information.

In a possible implementation, the second data stream is transmitted based on a tunnel or based on the MoQ protocol.

In a possible implementation, when the second data stream is transmitted based on the tunnel, the stream identification information is identification information carried in the tunneling protocol, and both the second data stream and the stream identification information are carried in the tunneling protocol.

In a possible implementation, when the second data stream is transmitted based on the MoQ protocol, the stream identification information is track identification information, and the track identification information is in one or more of the following forms: an identifier, a name, or a character string.

In this embodiment of this application, the stream identification information may be the identifier, the name, the character string, or the like, and a meaning of the stream identification information is extended.

According to a sixth aspect, a communication method is provided, applied to a session management SMF entity. The method includes: receiving a policy and charging control PCC rule, where the PCC rule includes stream identification information and a quality of service QoS requirement corresponding to the stream identification information, and the stream identification information is information carried based on a media over QUIC MoQ protocol or information carried in a tunneling protocol; and sending a mapping rule, where the mapping rule is generated based on the PCC rule, and the mapping rule includes a correspondence between the stream identification information and a first QoS flow identifier QFI corresponding to the stream identification information.

According to a seventh aspect, a communication apparatus is provided. The communication apparatus may be a user plane function UPF entity, or may be used in the UPF entity. The apparatus includes: a transceiver unit, configured to receive a second data stream and stream identification information corresponding to the second data stream, where the stream identification information is used for identifying the second data stream, and the stream identification information is information carried based on a media over QUIC MoQ protocol or information carried in a tunneling protocol; and a processing unit, configured to map the second data stream to a QoS flow based on the stream identification information.

In a possible implementation, the second data stream includes one or more substreams, the one or more substreams correspond to a same IP 5-tuple, and each substream corresponds to one piece of stream identification information; and mapping the second data stream to the QoS flow based on the stream identification information includes: mapping each substream to the QoS flow based on the stream identification information corresponding to the substream.

In a possible implementation, before mapping the second data stream to the QoS flow, the transceiver unit is further configured to: receive a first rule, where the first rule includes the stream identification information and a QFI corresponding to the stream identification information; and mapping the second data stream to the QoS flow based on the stream identification information includes: mapping, based on the first rule, the second data stream to the QoS flow indicated by the QFI corresponding to the stream identification information.

In a possible implementation, the second data stream is transmitted based on a tunnel or based on the MoQ protocol.

In a possible implementation, when the second data stream is transmitted based on the tunnel, the stream identification information is identification information carried in the tunneling protocol, and both the second data stream and the stream identification information are carried in the tunneling protocol.

In a possible implementation, when the second data stream is transmitted based on the MoQ protocol, the stream identification information is track identification information, and the track identification information is in one or more of the following forms: an identifier, a name, or a character string.

According to an eighth aspect, a communication apparatus is provided. The apparatus may be a session management SMF entity, or may be used in the SMF entity. The apparatus includes: a transceiver unit, configured to receive a first policy and charging control PCC rule, where the first PCC rule includes stream identification information and a quality of service QoS requirement corresponding to the stream identification information, and the stream identification information is information carried in a media over QUIC MoQ protocol or information carried in a tunneling protocol, where the transceiver unit is further configured to send a first rule, where the first rule is generated based on the PCC rule, and the first rule includes the stream identification information and a QoS flow identifier QFI corresponding to the stream identification information.

According to a ninth aspect, this application provides a communication device. The communication device includes a processor, the processor is coupled to a memory, and when the processor executes a computer program or instructions in the memory, the method in any one of the implementations of the first aspect or the second aspect is performed, or the method in any one of the implementations of the fifth aspect or the sixth aspect is performed.

Optionally, the apparatus further includes the memory.

Optionally, the apparatus further includes a communication interface, and the processor is coupled to the communication interface.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

In an implementation, the communication device is a UPF entity or an SMF entity. When the communication device is the UPF entity or the SMF entity, the communication interface may be a transceiver or an input/output interface. Optionally, the transceiver may be a transceiver circuit. Optionally, the input/output interface may be an input/output circuit.

In another implementation, the communication device is a chip or a chip system. When the apparatus is the chip or the chip system, the communication interface may be an input/output interface, an interface circuit, an output circuit, an input circuit, a pin, a related circuit, or the like on the chip or in the chip system. The processor may alternatively be embodied as a processing circuit or a logic circuit.

According to a tenth aspect, this application provides a communication system. The communication system includes the transmission apparatus in the third aspect and the transmission apparatus in the fourth aspect. Alternatively, the communication system includes the transmission apparatus in the seventh aspect and the transmission apparatus in the eighth aspect.

According to an eleventh aspect, an embodiment of this application provides a computer program product. The computer program product includes a computer program (which may also be referred to as code or instructions). When the computer program is run, a computer is caused to perform the method in any one of the possible implementations of the first aspect or the second aspect, or the computer is caused to perform the method in any one of the possible implementations of the fifth aspect or the sixth aspect.

According to a twelfth aspect, this application provides a computer-readable storage medium. The computer-readable medium includes a computer program (which may also be referred to as code or instructions). When the computer program is run on a computer, the computer is caused to perform the method in any one of the possible implementations of the first aspect or the second aspect, or the computer is caused to perform the method in any one of the possible implementations of the fifth aspect or the sixth aspect.

According to a thirteenth aspect, this application further provides a circuit, including a processor and an interface, configured to execute a computer program or instructions stored in a memory, to perform the method in any one of the possible implementations of the first aspect or the second aspect, or perform the method in any one of the possible implementations of the fifth aspect or the sixth aspect.

### BRIEF DESCRIPTION OF DRAWINGS

FIG. 1 is a diagram of a 5G network architecture according to an embodiment of this application;
FIG. 2 is a diagram of a data stream transmission process according to an embodiment of this application;
FIG. 3A is a flowchart of a communication method according to an embodiment of this application;
FIG. 3B is a diagram of a structure of an object message according to an embodiment of this application;
FIG. 4A is a flowchart of a communication method according to an embodiment of this application;
FIG. 4B is a diagram of a structure of an object message according to an embodiment of this application;
FIG. 5A to FIG. 11 are flowcharts of communication methods according to embodiments of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a hardware structure of a communication apparatus according to an embodiment of this application.

### DESCRIPTION OF EMBODIMENTS

The following describes embodiments of the present invention with reference to the accompanying drawings in embodiments of the present invention.

In the specification, the claims, and the accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that a specific feature, structure, or characteristic described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" refers to two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

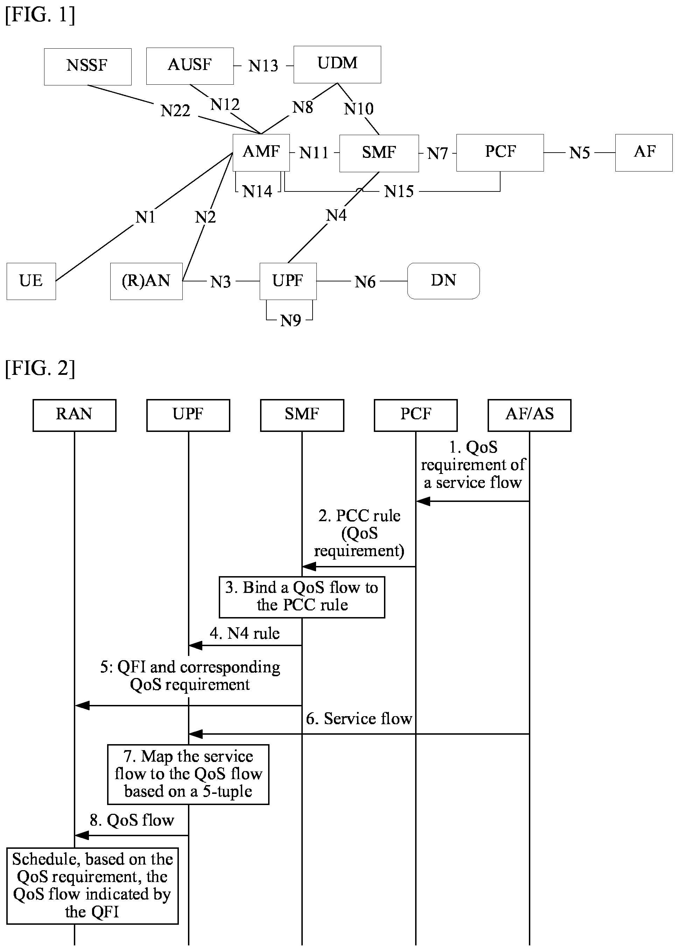

The following describes terms in embodiments of this application by using FIG. 1 as an example.

FIG. 1 is a diagram of a 5th generation mobile communication technology (5th Generation Mobile Networks, 5G) network architecture according to an embodiment of this application. The network architecture includes two parts: a (radio) access network ((Radio) Access Network, (R)AN, which is represented as a RAN) and a core network (Core Network, CN). The (R)AN is used for providing a network access function for authorized user equipment in a specific area, and can use transmission tunnels with different quality of service based on a level of the user equipment, a service requirement, and the like. For example, the (R)AN may manage a radio resource, provide an access service for the user equipment, and further complete forwarding of control information and/or data information between the user equipment (User Equipment, UE) and the core network (Core Network, CN). The CN mainly includes the following function entities.

An access and mobility management function (Access and Mobility Management Function, AMF) entity has main functions including user registration management, reachability detection, SMF node selection, mobility state transition management, and the like.

A session management function (Session Management Function, SMF) entity mainly functions to control session establishment, modification, and deletion, user plane node selection, and the like.

A user plane function (User Plane Function, UPF) entity mainly functions to implement data packet routing and forwarding, a mobility anchor, and an uplink classifier to support routing of a service flow to a data network, a branch point so as to support a multi-homed PDU session, and the like.

A policy control function (Policy Control Function, PCF) entity mainly functions as a policy decision point to provide rules such as a service data stream and application detection, gate control, quality of service (Quality of Service, QoS), and flow-based charging control.

A unified data management (Unified Data Management, UDM) function entity mainly functions to store user subscription data.

An authentication server function (Authentication Server Function, AUSF) entity mainly functions to provide an authentication service.

An application function (Application Function, AF) entity mainly functions to interact with a 3rd generation partnership project (3rd Generation Partnership Project, 3GPP) core network to provide services and influence service flow routing, access network capability exposure, policy control, and the like.

A network exposure function (Network Exposure Function, NEF) entity securely exposes services and capabilities, for example, a third-party, edge computing, and an AF, provided by a 3GPP network function.

A data network (Data network, DN) provides, for example, an operator service, internet access, or a third-party service.

A network data analytics function (Network Data Analytics Function, NWDAF) entity provides network data collection and analytics functions based on technologies such as big data and artificial intelligence.

FIG. 2 is a diagram of a data stream transmission process according to an embodiment of this application. As shown in FIG. 2, the process includes the following steps.
1. An AF sends a QoS requirement of a service flow.
2. A PCF receives the QoS requirement sent by the AF and sends a policy control and charging (Policy Control and Charging, PCC) rule to an SMF. The PCC rule is generated based on the QoS requirement sent by the AF.
3. The SMF receives the PCC rule, binds a QoS flow to the PCC rule, and allocates a QoS flow identifier QFI.
4. The SMF sends an N4 rule. The N4 rule includes the bound QFI.
5. The SMF sends the QFI and a corresponding QoS requirement.
6. An application server (Application Server, AS) sends the service flow.
7. A UPF receives the N4 rule, receives a data stream, identifies the service flow based on a 5-tuple, maps the service flow to the QoS flow indicated by the bound QFI, and sends the QoS flow.
8. A RAN receives the QFI and the corresponding QoS requirement, receives the QoS flow, and schedules, based on the QoS requirement, the QoS flow indicated by the QFI.

In the foregoing process, after each network function entity of a CN establishes a PDU session connection to the RAN (or modifies a PDU session connection), the SMF controls establishment of a QoS flow associated with a default QoS rule in each PDU session. Each QoS flow is configured with a corresponding QoS flow identifier (QoS Flow Identifier, QFI). In a conventional technology, data streams corresponding to a same 5-tuple are referred to as a service flow (service flow). Data streams (including data streams of different modalities or different types such as a video stream, an audio stream, and a tactile stream, or further including data streams obtained by mapping data sets with different priorities or different importance degrees in a same modality, for example, an I frame or a P frame and a base layer or an enhancement layer) corresponding to different QoS requirements in a same service flow are transmitted together. When there is no external information, the UPF usually maps data streams with a same 5-tuple to a same QoS flow based on the 5-tuple and sends the data streams to the RAN. However, for data streams (including at least two substreams such as an audio stream, a video stream, or a tactile stream in a same service, or for example, data sets of different types of PDU SETs of a same data stream, for example, substreams including an I frame and a P frame, or substreams including PDU SETs of a base layer and an enhancement layer) that are in the same service and that are encapsulated by using a QUIC protocol or an MoQ protocol, after receiving data carried in the QoS flow, the RAN cannot perform differentiated QoS processing on data corresponding to the at least two substreams that are in the same service, that have different QoS requirements, and that are included in the QoS flow, causing low network resource utilization.

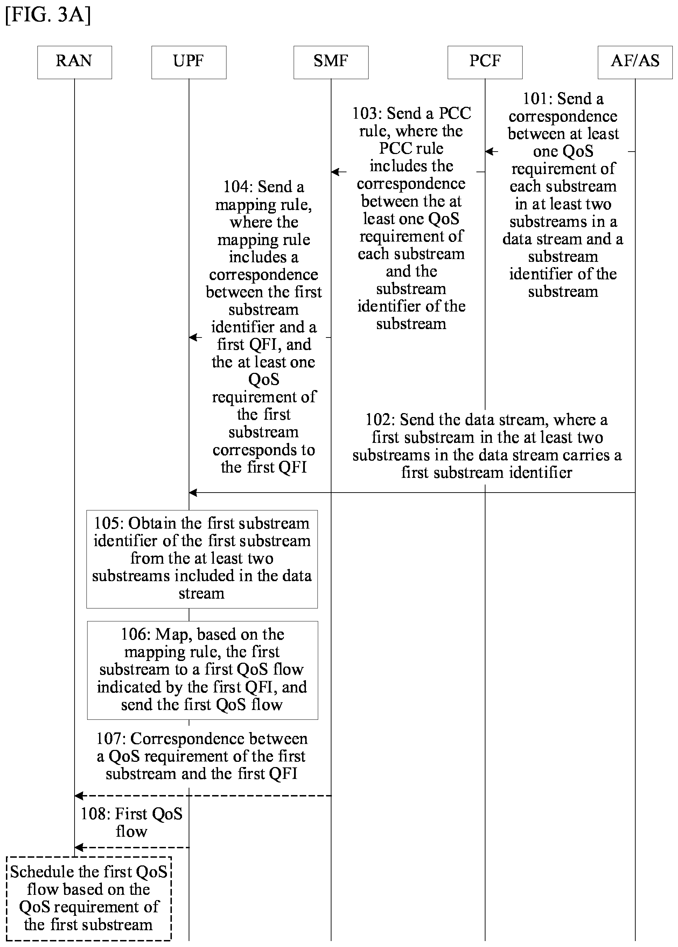

Based on this, FIG. 3A is a flowchart of a communication method according to an embodiment of this application. As shown in FIG. 3A, the method includes the following steps.

101: An AF sends a correspondence between at least one quality of service QoS requirement of each substream in at least two substreams in a data stream and a substream identifier of the substream. The at least two substreams correspond to a same 5-tuple, and substreams correspond to different substream identifiers.

The data stream in this embodiment of this application is encapsulated and transmitted based on a QUIC protocol, and may be further encapsulated and transmitted based on a media over QUIC (Media over QUIC, MoQ) protocol, or transmitted based on another encryption protocol, for example, a hypertext transfer protocol secure (Hypertext Transfer Protocol Secure, HTTPS). The 5-tuple is a set of five parameters: a source IP address, a source port, a destination IP address, a destination port, and a transport layer protocol, may be used for uniquely identifying a data stream, and may also be referred to as a service flow. The data stream may include one or more substreams, for example, a video stream, an audio stream, or a tactile stream (or another data stream parallel to the three streams, where these streams may be referred to as data streams of different modalities or different types) included in a same service. Each substream itself is a kind of data stream. Therefore, the data stream sent by the AF may be regarded as a data stream set. The substreams in the data stream may also be data (sub)streams (subsequently referred to as data substreams for distinguishing) obtained by mapping data sets with different importance degrees or different priorities in a same data stream, for example, data substreams corresponding to an I frame or a P frame and a base layer or an enhancement layer included in a video stream.

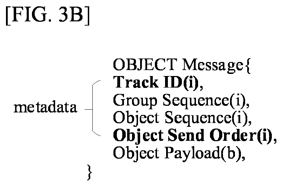

A data stream in a same service includes all substreams that form the data stream and that correspond to a same 5-tuple. However, these substreams correspond to different substream identifiers. For example, when the substreams in the data stream are video streams, audio streams, or tactile streams encapsulated and transmitted based on the QUIC protocol, the substream identifiers may be stream identifiers (stream ids). When the substreams in the data stream are video streams, audio streams, or tactile streams encapsulated and transmitted based on the MoQ protocol, the substream identifiers may be track identifiers (track ids). FIG. 3B is a diagram of a structure of an object message according to an embodiment of this application. As shown in FIG. 3B, when the MoQ protocol is used for transmission, the object message includes metadata (metadata) and a payload (payload). The metadata is unencrypted information that can be identified by a UPF, and the payload is encrypted information. The metadata includes a track identifier.

In some cases, substreams in a data stream may be data substreams obtained by mapping data sets with different importance degrees or different priorities corresponding to a same data stream. For example, the substreams in the data stream are an I frame and a P frame in a video stream. In this case, substream identifiers may be sequence identifiers (when a same service includes only a single video stream), may be track identifiers + sequence identifiers (when a same service includes a plurality of types of data streams such as a video stream, an audio stream, or a tactile stream), or may be stream identifiers + sequence identifiers. For example, for a data stream encapsulated and transmitted based on the MoQ protocol, as shown in FIG. 3B, metadata of the data stream includes a send order (send order) that indicates a sending sequence of the data stream. The send order is a sequence identifier.

In an optional case, the substream identifiers may be data substream identifiers. The data substream identifiers defined in this embodiment of this application are used for identifying data substreams obtained by mapping data sets with different importance degrees or different priorities in different data streams. For example, for a video stream in the data stream, a data substream identifier of an I frame of the video stream is 11xxx, and a data substream identifier of an audio stream is 12xxx. Data streams of different modalities in which substreams are located and different importance degrees or sending sequences may be distinguished by using the data substream identifiers.

Further, the data substream identifiers may be extended in the metadata shown in FIG. 3B.

Substreams in different data streams have corresponding QoS requirements. For example, a video stream or an audio stream has one or more corresponding QoS requirements. Therefore, correspondences between substream identifiers of substreams in each data stream and QoS requirements of the substreams may be established. For details, refer to Table 1.

**Table 1**

| **Substream in a data stream** | **Substream identifier** | **QoS requirement** |
|---|---|---|
| Video stream | Stream identifier 1 | QoS requirement aa and QoS requirement ab |
| Audio stream | Stream identifier 2 | QoS requirement b |

As shown in Table 1, the substreams in the data stream are the video stream and the audio stream. The video stream corresponds to the stream identifier 1, and the video stream has the QoS requirement aa and the QoS requirement ab. Therefore, correspondences between the stream identifier 1 and the QoS requirement aa and the QoS requirement ab exist. Similarly, a correspondence (stream identifier 2, QoS requirement b) further exists. The AF or an AS may send the correspondence.

102: The AS sends the data stream, where a first substream in the at least two substreams in the data stream carries a first substream identifier.

The AS sends the data stream to the UPF. The data stream may carry one or more substream identifiers. Specifically, each substream in the data stream may carry one substream identifier corresponding to the substream. For example, if the first substream included in the sent data stream is a video stream, metadata of an MoQ packet may include a track identifier of the video stream, or a QUIC packet may include a stream identifier of the video stream.

In addition, the substream identifiers in this embodiment of this application are carried in information that can be decrypted by the UPF and that is in the data stream. For example, the track identifier is carried in the metadata, and the UPF can decrypt the metadata and read the track identifier. Therefore, a newly proposed data substream identifier may also be extended in the metadata of the MoQ packet, or in other information that can be decrypted by the UPF. This is not limited in this embodiment of this application. In this way, it can be convenient for the UPF to obtain the substream identifiers in a data stream transmission process, and an encrypted data payload transmission security problem that may be caused by obtaining the substream identifiers from other encrypted information can be avoided.

103: A PCF receives the correspondence between the at least one QoS requirement and the substream identifier of each substream in the at least two substreams in the data stream, and sends a policy control and charging PCC rule.

The PCF receives the correspondence that is between the at least one QoS requirement and the substream identifier of each substream in the at least two substreams in the data stream and that is sent by the AF. Specifically, the correspondence between the substream identifier and the QoS requirement in Table 1 may be used. Then, the PCF generates the policy control and charging (Policy Control and Charging, PCC) rule based on these correspondences. In other words, the PCC rule includes the correspondence between the at least one QoS requirement of each substream and the substream identifier of the substream. There may be one PCC rule or a plurality of PCC rules. For example, one PCC rule is generated based on correspondences between QoS requirements of all substreams in the data stream and substream identifiers of all the substreams. Alternatively, one PCC rule is generated based on correspondences between QoS requirements of some substreams in the data stream and substream identifiers of the substreams. In this case, all substreams in the data stream correspond to a plurality of PCC rules. Alternatively, one PCC rule is generated based on a correspondence between a QoS requirement of one substream in the data stream and a substream identifier of the substream. The PCC rule sent by the PCF may alternatively be specific only to correspondences of some substreams in the data stream. This is not limited in this embodiment of this application.

104: An SMF receives the PCC rule and sends a mapping rule. The mapping rule is generated based on the PCC rule, the mapping rule includes a correspondence between the first substream identifier and a first QoS flow identifier QFI, and at least one QoS requirement of the first substream corresponds to the first QFI.

The PCF sends the PCC rule to the SMF, and the SMF may be configured to generate a QoS flow. Specifically, after obtaining the PCC rule, the SMF determines a quantity of substream identifiers based on the correspondence between the at least one QoS requirement of substream in the data stream and the substream identifier of the substream in the data stream, generates a QoS flow based on the quantity of substream identifiers, and allocates a QoS flow identifier (QoS Flow Identifier, QFI) to the QoS flow. In this way, the substream identifiers can correspond to different QFIs, and the correspondences form the mapping rule.

In this embodiment of this application, the PCC rule includes a correspondence between the at least one QoS requirement of the first substream and the first substream identifier, and the generated mapping rule includes a correspondence between the first substream identifier and the first QFI. Refer to Table 2.

**Table 2**

| **QoS requirement** | **Substream identifier** | **QFI** |
|---|---|---|
| QoS requirement aa and QoS requirement ab | Stream identifier 1 | QFI 1 |
| QoS requirement b | Stream identifier 2 | QFI 2 |

As shown in Table 2, an example in which the first substream identifier is the stream identifier 1 is used. The SMF generates (or binds) two QoS flows, that is, the first QoS flow and a second QoS flow, based on the two stream identifiers, allocates the first QFI, that is, the QFI 1 in the table, to the first QoS flow, allocates a second QFI, that is, the QFI 2 in the table, to the second QoS flow, and generates correspondences (stream identifier 1, QFI 1) and (stream identifier 2, QFI 2). Then, the SMF sends a mapping rule including the correspondence.

In an optional case, the PCF may indicate, to the SMF, the correspondence between the at least one quality of service QoS requirement and the substream identifier of the substream in the data stream by using other information, not necessarily through the PCC rule. This is not specifically limited in this embodiment of this application.

105: The UPF receives the data stream, and obtains the first substream identifier of the first substream from the at least two substreams included in the data stream.

106: The UPF receives the mapping rule, maps, based on the mapping rule, the first substream to the first QoS flow indicated by the first QFI, and sends the first QoS flow.

The UPF receives the mapping rule, and obtains correspondences between the substream identifiers and QFIs of the substreams in the data stream from the mapping rule. Then, the UPF receives the at least two substreams that are in the data stream and that are sent by the AS, and obtains, from the data stream, the substream identifier corresponding to the first substream. Further, the UPF determines, based on a correspondence that is between the substream identifier of the first substream and a QFI and that is included in the mapping rule, a QoS flow to which the first substream should be mapped. For example, the obtained substream identifier of the first substream is the stream identifier 1, and the first substream is mapped, based on the correspondence (stream identifier 1, QFI 1) in the mapping rule, to the first QoS flow indicated by the QFI 1. Finally, the UPF sends the first QoS flow to the RAN. Sending a QoS flow is sending data carried in the QoS flow. Similarly, receiving a QoS flow is receiving data carried in the QoS flow, and scheduling a QoS flow is scheduling data carried in the QoS flow. The descriptions are applicable to all the following embodiments.

Optionally, the method further includes: The SMF sends first information, where the first information indicates that a protocol used by the data stream is the MoQ protocol and/or indicates to obtain the substream identifier. Correspondingly, the UPF receives the first information, and obtains the substream identifier of the first substream from the data stream based on the first information.

In some cases, the UPF needs to obtain, only when receiving indication information, the substream identifiers corresponding to the substreams in the data stream, and respectively maps the substreams corresponding to the substream identifiers to QoS flows. In this way, overheads can be reduced when the substream in the data stream does not need to be mapped to the QoS flow based on the mapping rule. Therefore, before step 105, the SMF may further send the first information to the UPF, to indicate that the data stream is transmitted by using the MoQ protocol (where when the MoQ protocol is used for transmission, extended information in the metadata may include the substream identifier), or indicate to obtain the substream identifier. When receiving the first information, the UPF obtains the substream identifiers corresponding to the substreams in the data stream, and maps the substreams to the QoS flows based on the correspondences between the substream identifiers and the QFIs of the substreams.

In an optional case, the first information is at least one of the following: an MoQ protocol described in a protocol description, a transmission indication of transmission using the MoQ protocol, an indication identifier indicating to detect the substream identifiers, a QoS parameter of a protocol data unit PDU set, or a PDU set granularity transmission indication.

When the first information indicates that the protocol used by the data stream is the MoQ protocol, the first information may be the MoQ protocol described in the protocol description, or the transmission indication of transmission using the MoQ protocol. The protocol description is a protocol description field sent by the SMF to the UPF, and the MoQ protocol is described in the protocol description. In this way, the UPF learns that the data stream sent by the AF includes metadata, and the UPF may identify the substream identifiers from the metadata, for example, the foregoing described data substream identifiers, track identifiers, send orders, or sequence identifiers. Similarly, when the first information is the transmission indication of transmission using the MoQ protocol, the UPF can also detect or identify the substream identifiers from the metadata. The transmission indication of transmission using the MoQ protocol may be carried in a newly added field in an MoQ packet.

When the first information indicates to obtain the substream identifiers corresponding to the data stream, the first information may be the indication identifier indicating to detect the substream identifiers, the QoS parameter of the protocol data unit PDU set, or the PDU set granularity transmission indication. If the first information is the indication information indicating to detect the substream identifiers, the UPF may directly detect the substream identifiers based on the indication information. The indication information indicating to detect the substream identifiers may be carried in a newly added field in an MoQ packet or a QUIC packet. The first information is the QoS parameter of the protocol data unit (Protocol Data Unit, PDU) set (set), for example, a network bandwidth, a network delay, a packet loss rate, or transmission reliability. The UPF obtains the QoS parameter of the PDU set. When the QoS parameter satisfies a specific condition, for example, the network bandwidth is greater than a preset threshold, it indicates that substreams with different QoS requirements can be mapped to different QoS flows is supported. In this case, the UPF detects the substream identifiers and performs subsequent mapping. When the first information is the PDU set granularity transmission indication, the service data flow is an XR service flow, and the UPF detects the substream identifiers.

The first information may alternatively be a combination of the foregoing described information. For example, the first information is the transmission indication of transmission using the MoQ protocol and the QoS parameter of the PDU set. When the UPF receives the transmission indication of transmission using the MoQ protocol, and when the QoS parameter of the PDU set is higher than the preset threshold, the UPF detects the substream identifiers and performs a subsequent mapping operation.

In an optional case, the method further includes: The SMF receives second information, where the second information indicates the protocol used by the data stream and/or indicates to detect the substream identifiers. The SMF sends the first information based on the second information.

In other words, when receiving the second information, the SMF generates the first information based on the second information. Alternatively, the first information may be the received second information that is directly and transparently transmitted by the SMF. Similarly, the second information may also be at least one piece of the foregoing description information: an MoQ protocol described in a protocol description, a transmission indication of transmission using the MoQ protocol, an indication identifier indicating to detect the substream identifiers, a QoS parameter of a protocol data unit PDU set, or a PDU set granularity transmission indication. The second information received by the SMF may be spontaneously sent by the PCF, may be generated and sent by the PCF based on information about the AF, or may be the second information sent by the AF and transparently transmitted by the PCF. This is not specifically limited in this embodiment of this application.

Further, after mapping the substreams in the data stream to the QoS flows based on the correspondences between the substream identifiers and the QFIs, the UPF sends the QoS flows to the RAN, and the RAN schedules the QoS flows based on QoS requirements corresponding to the QoS flows. Specifically, the method includes step 107: The SMF sends correspondences between QoS requirements and the QFIs of the substreams in the at least two substreams in the data stream. The correspondences include a correspondence between the QoS requirement of the first substream and the first QFI. Correspondingly, the RAN receives the correspondences between the QoS requirements and the QFIs of the substreams, and then performs step 108: The RAN receives the first QoS flow sent by the SMF, and schedules, based on the QoS requirement of the first substream, the first QoS flow indicated by the first QFI. The RAN may determine, based on the QoS requirement, a priority of scheduling the QoS flow indicated by the QFI (to the UE) and a condition that needs to be satisfied for scheduling the QoS flow indicated by the QFI. For example, a QoS requirement corresponding to the QFI 1 is high, and when network quality is better, the RAN may schedule a QoS flow indicated by the QFI 1 (where this may also be referred to as QoS processing on the QoS flow).

Optionally, the method further includes: obtaining a second substream identifier of a second substream from the at least two substreams included in the data stream; and mapping the second substream to a second QoS flow indicated by a second QFI corresponding to the second substream identifier.

In other words, any substream included in the data stream can be mapped to a corresponding QoS flow through the foregoing processing process of the first substream. Details are not described again in this embodiment of this application.

It should be noted that, in this embodiment of this application, that the UPF maps, based on the mapping rule sent by the SMF, the first substream to the QoS flow indicated by the QFI corresponding to the substream identifier of the first substream is not a necessary step for implementing this embodiment of this application. In other words, this embodiment of this application may not include steps 103 and 104, and step 106 is replaced with step 106a (not shown in the figure): The UPF maps the first substream to the QoS flow indicated by the QFI corresponding to the substream identifier of the first substream. A manner in which the UPF obtains the correspondences between the substream identifiers and the QFIs is not limited in this embodiment of this application.

It can be learned that, in this embodiment of this application, based on the substream identifiers of the data stream and one or more QoS requirements corresponding to the substreams in the data stream, correspondences between the substream identifiers and the QoS requirements of the substreams are obtained, and then correspondences between the substream identifiers and the QFIs are obtained. Further, substreams with different QoS requirements in the data stream can be mapped, by using the substream identifiers, to QoS flows indicated by different QFIs, so that corresponding QoS processing is performed on the substreams in the data stream. This process makes different QoS processing be aligned with corresponding QoS requirements, to avoid a waste of network resources that may be caused by applying high-QoS processing to a substream with a low QoS requirement, and avoid non-standard network quality of service that may be caused by applying low-QoS processing to a substream with a high QoS requirement. This improves network resource utilization and ensures network quality of service.

It should be noted that the foregoing step sequence is not necessarily an execution sequence of the method, and the sequence described in this application should not be construed as a limitation on an implementation process of the method. For example, step 107 only needs to be performed after step 103 and before step 106, and there is no specific sequence between step 107 and steps 104 and 105.

An embodiment of this application provides a communication indication method (not shown in the figure). The method includes the following steps.

1001: An SMF sends first information, where the first information indicates that a protocol used for data stream transmission is an MoQ protocol.

Consistent with the descriptions in the foregoing embodiment, the first information may be a protocol description field, or a transmission indication of transmission using the MoQ protocol. When the first information is the protocol description field, the MoQ protocol is described in the protocol description field sent by the SMF to a UPF. When the first information is the transmission indication of transmission using the MoQ protocol, the SMF may use a newly added field in the sent information to carry the transmission indication of transmission using the MoQ protocol.

1002: The UPF receives the first information.

After receiving the first information, as described in the foregoing embodiment, for example, the UPF may receive a data stream sent by an AS, obtain a substream identifier corresponding to a substream from the data stream, map the substream to a QoS flow indicated by a QFI corresponding to the substream identifier, or identify PDU set information. In other words, this embodiment of this application may be combined with the foregoing embodiments in FIG. 3A to FIG. 3B, or may exist independently.

The MoQ protocol in this embodiment of this application may also be replaced with a QUIC protocol. In other words, the SMF sends information to the UPF to indicate that the QUIC protocol or the MoQ protocol is used in a data transmission process, so that data stream transmission between function entities can adapt to a transmission agreement of the protocol.

The following separately describes cases related to different substream identifiers in the foregoing embodiments.

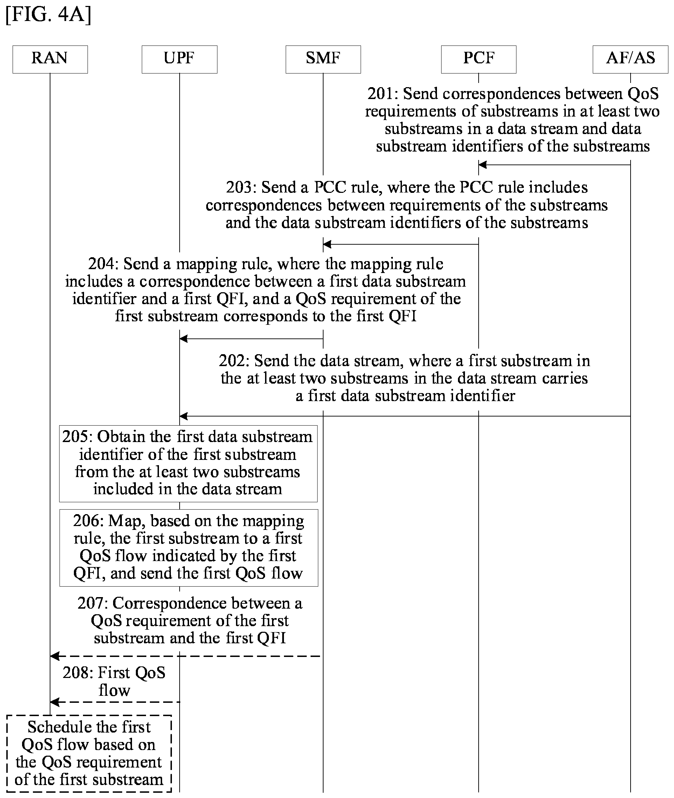

FIG. 4A is a flowchart of a communication method according to an embodiment of this application. As shown in FIG. 4A, substream identifiers in the method are data substream identifiers. The method includes the following steps.

201: An AF sends correspondences between QoS requirements of substreams in at least two substreams in a data stream and data substream identifiers of the substreams.

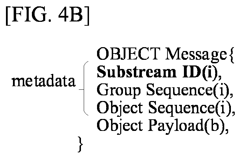

The data substream identifiers indicate data substreams obtained by mapping data sets with different importance degrees or different priorities in a same data stream. Specifically, the data substreams may be data substreams encapsulated and transmitted based on QUIC or data substreams encapsulated and transmitted based on MoQ. FIG. 4B is a diagram of a structure of an object message according to an embodiment of this application. As shown in FIG. 4B, a data stream encapsulated and transmitted based on MoQ is used as an example, and a data substream identifier (an example of a substream ID in FIG. 4B) may be extended information in metadata. In addition, data streams of different modalities and data substreams with different importance degrees or sending sequences can be distinguished by using data substream identifiers. Therefore, the metadata may not include a track identifier or a send order.

A data substream identifier in this embodiment of this application is used for identifying one data substream. Usually, one data substream corresponds to one QoS requirement. Therefore, the data substream identifier is in one-to-one correspondence with the QoS requirement.

202: The AS sends the data stream, where a first substream in the at least two substreams in the data stream carries a first data substream identifier.

For example, the data substream identifier is carried in metadata of an MoQ packet of a data stream of each modality.

203: A PCF receives the correspondences between the QoS requirements of the substreams and the data substream identifiers of the substreams in the at least two substreams in the data stream, and sends a policy control and charging PCC rule.

204: An SMF receives the PCC rule and sends a mapping rule. The mapping rule is generated based on the PCC rule, the mapping rule includes a mapping relationship between the first data substream identifier and a first QFI, and a QoS requirement of the first substream corresponds to the first QFI.

205: A UPF receives the data stream, and obtains the first data substream identifier of the first substream from the at least two substreams included in the data stream.

206: The UPF receives the mapping rule, maps, based on the mapping rule, the first substream to a first QoS flow indicated by the first QFI, and sends the first QoS flow.

207: The SMF sends correspondences between the QoS requirements and QFIs of the substreams in the at least two substreams in the data stream. The correspondences include a correspondence between the QoS requirement of the first substream and the first QFI.

208: A RAN receives the correspondences between the QoS requirements and the QFIs of the substreams, receives the first QoS flow, and schedules, based on the QoS requirement of the first substream, the first QoS flow indicated by the first QFI.

Execution steps of the communication method are described above when the substream identifiers are data substream identifiers. For details about related descriptions, refer to the descriptions in FIG. 3A and FIG. 3B. In this method, because the substreams that are indicated by the data substream identifiers and that are in the data stream are in one-to-one correspondence with the QoS requirements, a substream corresponding to each QoS requirement can be mapped to a separate QoS flow. Scheduling of each QoS flow by a receive end is performing separate QoS processing on the substream that corresponds to each QoS requirement and that is in the data stream. This can ensure network quality of service to the greatest extent.

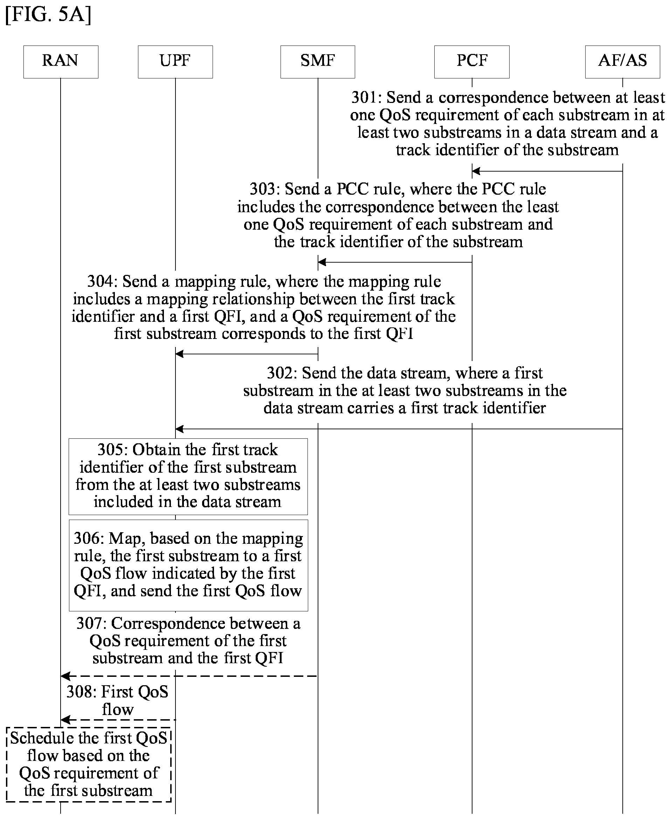

FIG. 5A is a flowchart of a communication method according to an embodiment of this application. As shown in FIG. 5A, substream identifiers in the method are track identifiers. The method includes the following steps.

301: An AF sends a correspondence between at least one QoS requirement of each substream in at least two substreams in a data stream and a track identifier of the substream.

A track identifier indicates that a data stream (substream) encapsulated and transmitted based on MoQ is a video stream, an audio stream, or a tactile stream. A substream, for example, a video stream, that is indicated by a same track identifier and that is in the data stream may include one QoS requirement, or may include a plurality of QoS requirements. Therefore, one track identifier may correspond to one or more QoS requirements.

302: An AS sends the data stream, where a first substream in the at least two substreams in the data stream carries a first track identifier.

For example, the track identifier is carried in metadata of an MoQ packet of a video stream, an audio stream, or a tactile stream.

303: A PCF receives correspondences between QoS requirements of the substreams and track identifiers of the substreams in the at least two substreams in the data stream, and sends a policy control and charging PCC rule.

304: An SMF receives the PCC rule and sends a mapping rule. The mapping rule is generated based on the PCC rule, the mapping rule includes a mapping relationship between the first track identifier and a first QFI, and a QoS requirement of the first substream corresponds to the first QFI.

305: A UPF receives the data stream, and obtains the first track identifier of the first substream from the at least two substreams included in the data stream.

306: The UPF receives the mapping rule, maps, based on the mapping rule, the first substream to a first QoS flow indicated by the first QFI, and sends the first QoS flow.

307: The SMF sends correspondences between the QoS requirements and QFIs of the substreams in the at least two substreams in the data stream. The correspondences include a correspondence between the QoS requirement of the first substream and the first QFI.

308: A RAN receives the correspondences between the QoS requirements and the QFIs of the substreams, receives the first QoS flow, and schedules, based on the QoS requirement of the first substream, the first QoS flow indicated by the first QFI.

Execution steps of the communication method are described above when the substream identifiers are track identifiers. For details about related descriptions, refer to the descriptions in FIG. 3A and FIG. 3B. In the method, the track identifiers are used for identifying a video stream, an audio stream, and a tactile stream that are encapsulated and transmitted based on an MoQ protocol. Data streams of the three different modalities usually have different QoS requirements. Substreams in the data stream are mapped, based on track identifiers, to QoS flows indicated by QFIs, so that corresponding QoS processing can be performed on the data streams of the three different modalities, to effectively improve network utilization.

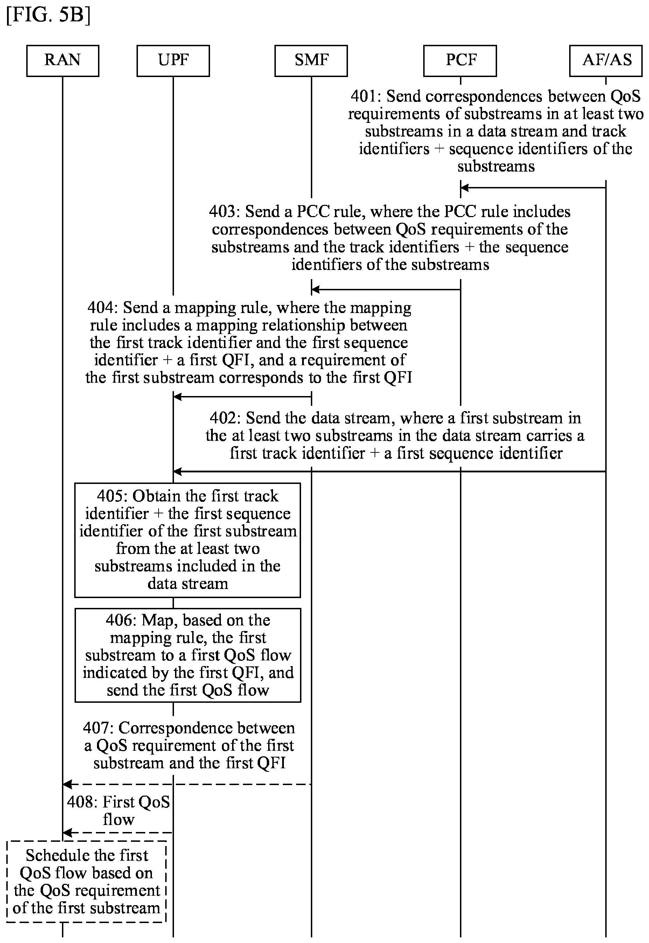

In some cases, when the data stream is encapsulated and transmitted based on the MoQ protocol, the substreams in the data stream may be substreams in the data stream that have different sending sequences, different importance degrees, or different priorities in a same modality. Therefore, the substreams in the data stream may be further indicated by using the track identifiers + sequence identifiers. FIG. 5B is a flowchart of another communication method according to an embodiment of this application. As shown in FIG. 5B, substream identifiers in the method are track identifiers + sequence identifiers. The method includes the following steps.

401: An AF sends correspondences between QoS requirements of substreams in at least two substreams in a data stream and track identifiers + sequence identifiers of the substreams.

A track identifier indicates that a data stream (substream) encapsulated and transmitted based on MoQ is a video stream, an audio stream, or a tactile stream. Sequence identifiers indicate different sending sequences, different importance degrees, or different priorities of data substreams. Therefore, the track identifiers + the sequence identifiers may indicate different data substreams in a same data stream. Different data substreams usually correspond to one QoS requirement. Therefore, the track identifiers + the sequence identifiers are in one-to-one correspondence with QoS requirements.

402: An AS sends the data stream, where a first substream in the at least two substreams in the data stream carries a first track identifier + a first sequence identifier.

For example, the track identifier is carried in metadata of an MoQ packet of a video stream, an audio stream, or a tactile stream. The sequence identifier may be a send order, or may be carried in the metadata of the MoQ packet. Alternatively, there may be another sequence identifier, and the sequence identifier is carried in another field in the MoQ packet. This is not limited in this embodiment of this application.

403: A PCF receives the correspondences between the QoS requirements of the substreams and the track identifiers + the sequence identifiers of the substreams in the at least two substreams in the data stream, and sends a policy control and charging PCC rule.

404: An SMF receives the PCC rule and sends a mapping rule. The mapping rule is generated based on the PCC rule, the mapping rule includes a mapping relationship between the first track identifier + the first sequence identifier and a first QFI, and a QoS requirement of the first substream corresponds to the first QFI.

405: A UPF receives the data stream, and obtains the first track identifier + the first sequence identifier of the first substream from the at least two substreams included in the data stream.

406: The UPF receives the mapping rule, maps, based on the mapping rule, the first substream to a first QoS flow indicated by the first QFI, and sends the first QoS flow.

407: The SMF sends correspondences between the QoS requirements and QFIs of the substreams in the at least two substreams in the data stream. The correspondences include a correspondence between the QoS requirement of the first substream and the first QFI.

408: A RAN receives the correspondences between the QoS requirements and the QFIs of the substreams, receives the first QoS flow, and schedules, based on the QoS requirement of the first substream, the first QoS flow indicated by the first QFI.

Execution steps of the communication method are described above when the substream identifiers are track identifiers + sequence identifiers. For details about related descriptions, refer to the descriptions in FIG. 3A and FIG. 3B. In the method, the track identifiers + the sequence identifiers are used for identifying data substreams with different sending sequences, different importance degrees, or different priorities in three data streams: a video stream, an audio stream, and a tactile stream. Further QoS requirement division can be performed on a data stream of each modality. Substreams in the data stream are mapped, based on track identifiers + sequence identifiers, to QoS flows indicated by QFIs, so that network utilization can be further improved, and network quality can be ensured.

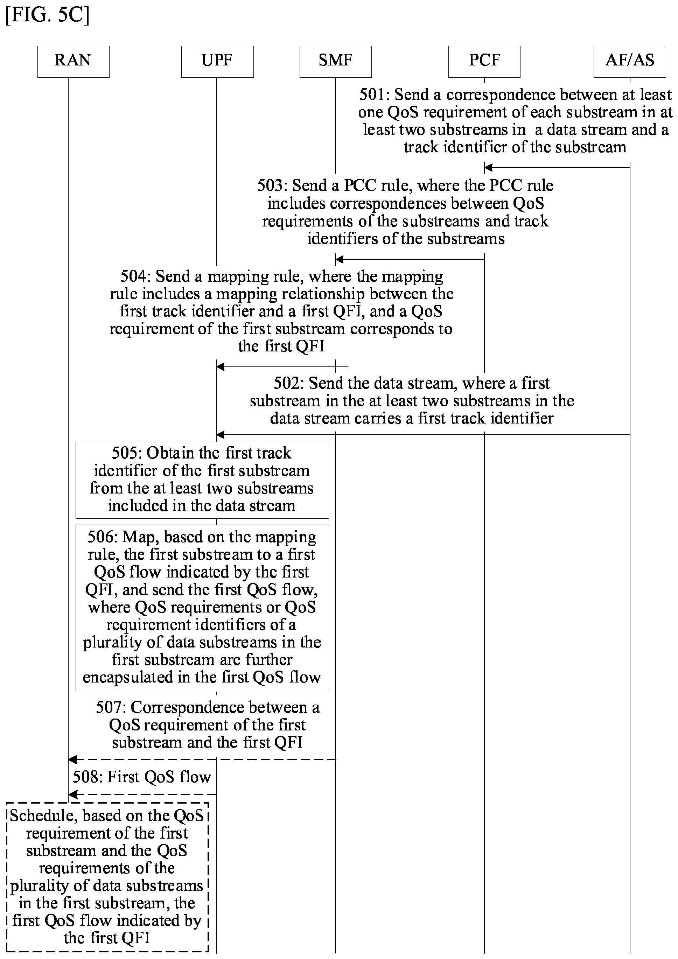

In some cases, when the data stream is encapsulated and transmitted based on an MoQ protocol, substreams in the data stream that have different sending sequences, different importance degrees, or different priorities in a same modality are not respectively indicated by the substream identifiers. In this case, the substreams in the data stream may be indicated by using the track identifiers, and then a scheduling indication is encapsulated to perform differentiated QoS processing on different data substreams in the substreams indicated by the track identifiers. FIG. 5C is a flowchart of another communication method according to an embodiment of this application. As shown in FIG. 5C, substream identifiers in the method are track identifiers. The method includes the following steps.

501: An AF sends a correspondence between at least one QoS requirement of each substream in at least two substreams in a data stream and a track identifier of the substream.

502: An AS sends the data stream, where a first substream in the at least two substreams in the data stream carries a first track identifier.

503: A PCF receives correspondences between QoS requirements of the substreams and track identifiers of the substreams in the at least two substreams in the data stream, and sends a policy control and charging PCC rule.

504: An SMF receives the PCC rule and sends a mapping rule. The mapping rule is generated based on the PCC rule, the mapping rule includes a mapping relationship between the first track identifier and a first QFI, and a QoS requirement of the first substream corresponds to the first QFI.

505: A UPF receives the data stream, and obtains the first track identifier of the first substream from the at least two substreams included in the data stream.

506: The UPF receives the mapping rule, maps, based on the mapping rule, the first substream to a first QoS flow indicated by the first QFI, and sends the first QoS flow, where QoS requirements or QoS requirement identifiers of a plurality of data substreams in the first substream are further encapsulated in the first QoS flow.

In this embodiment of this application, the first substream indicated by a same track identifier is mapped to the first QoS flow indicated by the first QFI. In this case, the first substream may be a video stream, an audio stream, or a tactile stream, or a stream of a different modality or a different type. The first substream may further include a plurality of substreams in the data stream that have different sending sequences, different importance degrees, or different priorities. For example, the video stream may further include a data substream corresponding to an I frame or a P frame. This means that the first QoS flow further corresponds to different QoS requirements of a plurality of data substreams, and data of the data substreams with different QoS requirements corresponds to different scheduling policies. To enable a RAN to perform corresponding scheduling processing on data with different QoS requirements in the first QoS flow, the QoS requirements or the QoS requirement identifiers may be encapsulated in the QoS flows. In this case, after obtaining the first QoS flow, the RAN may further schedule, based on a corresponding scheduling policy, data packets of different data substreams in the first QoS flow based on the encapsulated QoS requirements or QoS requirement identifiers. For example, a QoS requirement 1 is encapsulation information, and is encapsulated in a data packet corresponding to a data substream 1. After obtaining the data packet corresponding to the data substream 1 in the first QoS flow, the RAN obtains the encapsulation information from the data packet, and schedules, based on a scheduling policy corresponding to the QoS requirement 1, the data packet corresponding to the data substream 1.

In an optional case, the QoS requirements or the QoS requirement identifiers of the plurality of data substreams in the first substream are encapsulated in a general packet radio service (general packet radio service, GPRS) tunnel transmission protocol (tunnel transmission protocol) (GTP-U) header of the first QoS flow. After receiving the QoS flows, the RAN preferentially reads encapsulation information in the GTP-U header, and then obtains a scheduling policy of a data packet based on the encapsulation information. This can ensure that the data packet in the entire QoS flow is completely scheduled based on the encapsulation information, to avoid an error or omission in a scheduling process.

507: The SMF sends correspondences between the QoS requirements and QFIs of the substreams in the at least two substreams in the data stream. The correspondences include a correspondence between the QoS requirement of the first substream and the first QFI.

508: The RAN receives the correspondences between the QoS requirements and the QFIs of the substreams, receives the first QoS flow, and schedules, based on the QoS requirement of the first substream and the QoS requirements of the plurality of data substreams in the first substream, the first QoS flow indicated by the first QFI.

After receiving the correspondences between the QFIs and the QoS requirements, and receiving the QoS flows, the RAN may schedule, to UE based on the QoS requirements, the QoS flows indicated by the QFIs. An example in which the substream in the data stream is the first substream is used. Assumed that no additional QoS requirement is encapsulated in the data packet in the first QoS flow to which the first substream is mapped, the RAN may perform one-time scheduling on all data packets of the first QoS flow. Assuming that an additional QoS requirement is encapsulated in the data packet of the first QoS flow, the RAN performs scheduling processing corresponding to the additional QoS requirement on the data packet with the additional QoS requirement, or performs scheduling processing corresponding to both the additional QoS requirement and the QoS requirement of the first QoS flow, and performs scheduling processing corresponding to the first QoS flow on a remaining data packet in which the additional QoS requirement is not encapsulated.

Execution steps of the communication method are described above when the substream identifiers are track identifiers, and the substreams that are indicated by the track identifiers and that are in the data stream further includes a plurality of data substreams. For details about related descriptions, refer to the descriptions in FIG. 3A and FIG. 3B. In the method, the track identifiers are used for identifying data streams of three types, that is, a video stream, an audio stream, and a tactile stream. If data substreams with different sending sequences, different importance degrees, or different priorities are further included, encapsulation information encapsulated in the QoS flows is used to differentiate the scheduling policy and QoS processing for the data substreams. This process is specific only to data substreams that need differentiated QoS processing, and does not need to be specific to all data substreams. In this way, network utilization can be improved, and overheads in a data stream processing process can be reduced.

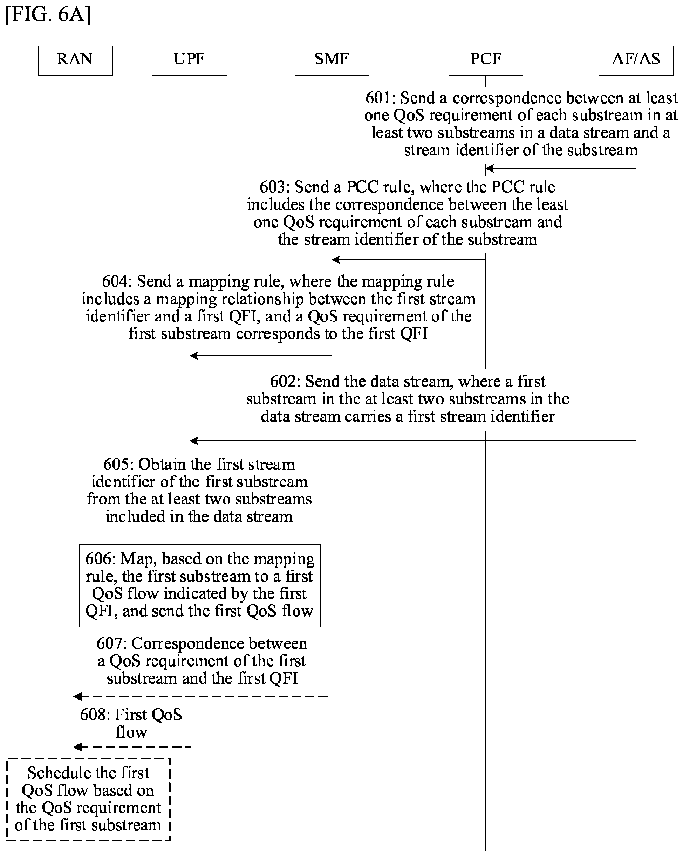

FIG. 6A is a flowchart of a communication method according to an embodiment of this application. As shown in FIG. 6A, substream identifiers in the method are stream identifiers, and the method includes the following steps.

601: An AF sends a correspondence between at least one QoS requirement of each substream in at least two substreams in a data stream and a stream identifier of the substream.

A stream identifier indicates that a data stream (substream) encapsulated and transmitted based on QUIC is a video stream, an audio stream, or a tactile stream. A substream, for example, a video stream, that is indicated by a same stream identifier and that is in the data stream may include one QoS requirement, or may include a plurality of QoS requirements. Therefore, one stream identifier may correspond to one or more QoS requirements.

602: An AS sends the data stream, where a first substream in the at least two substreams in the data stream carries a first stream identifier.

For example, the stream identifier is carried in a data packet of a QUIC packet of a video stream, an audio stream, or a tactile stream.

603: A PCF receives correspondences between QoS requirements of the substreams and stream identifiers of the substreams in the at least two substreams in the data stream, and sends a policy control and charging PCC rule.

604: An SMF receives the PCC rule and sends a mapping rule. The mapping rule is generated based on the PCC rule, the mapping rule includes a mapping relationship between the first stream identifier and a first QFI, and a QoS requirement of the first substream corresponds to the first QFI.

605: A UPF receives the data stream, and obtains the first stream identifier of the first substream from the at least two substreams included in the data stream.

606: The UPF receives the mapping rule, maps, based on the mapping rule, the first substream to a first QoS flow indicated by the first QFI, and sends the first QoS flow.

607: The SMF sends correspondences between the QoS requirements and QFIs of the substreams in the at least two substreams in the data stream. The correspondences include a correspondence between the QoS requirement of the first substream and the first QFI.

608: A RAN receives the correspondences between the QoS requirements and the QFIs of the substreams, receives the first QoS flow, and schedules, based on the QoS requirement of the first substream, the first QoS flow indicated by the first QFI.

Execution steps of the communication method are described above when the substream identifiers are stream identifiers. For details about related descriptions, refer to the descriptions in FIG. 3A and FIG. 3B. In the method, the stream identifiers are used for identifying a video stream, an audio stream, and a tactile stream that are encapsulated and transmitted based on a QUIC protocol. Data streams of the three different modalities usually have different QoS requirements. Substreams in the data streams are mapped, based on stream identifiers, to QoS flows indicated by QFIs, so that corresponding QoS processing can be performed on the data streams of the three different modalities, to effectively improve network utilization.

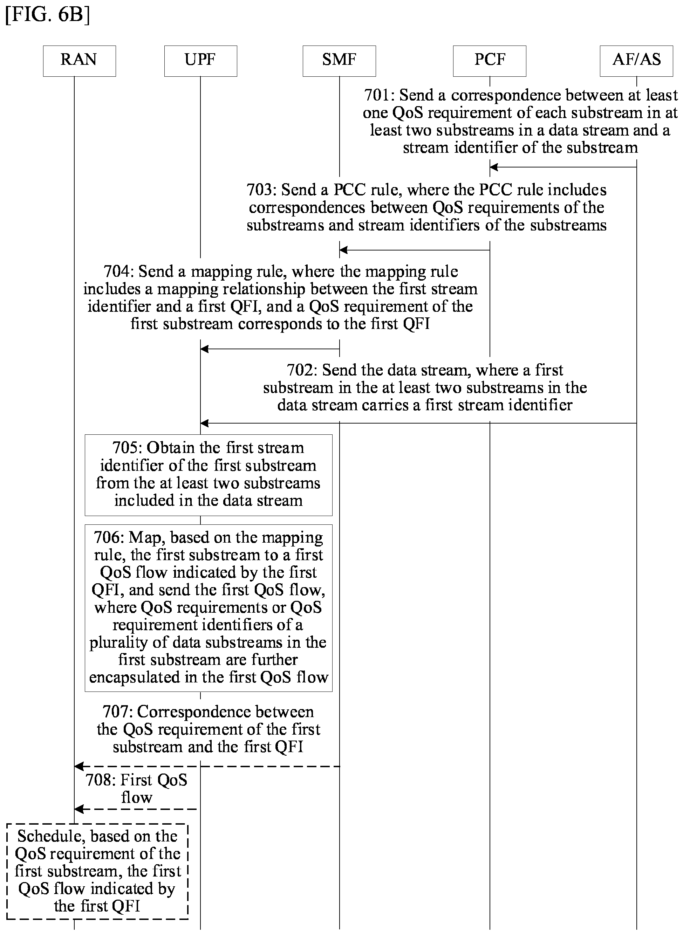

In some cases, when the data stream is transmitted based on a QUIC encapsulation protocol, substreams in the data stream that have different sending sequences, different importance degrees, or different priorities in a same modality are not respectively indicated by the substream identifiers. In this case, the substreams in the data stream may be indicated by using the stream identifiers, and then differentiated QoS processing is performed, by using an encapsulation scheduling indication, on different data substreams in the substreams indicated by the stream identifiers. FIG. 6B is a flowchart of another communication method according to an embodiment of this application. As shown in FIG. 6B, substream identifiers in the method are stream identifiers, and the method includes the following steps.

701: An AF sends a correspondence between at least one QoS requirement of each substream in at least two substreams in a data stream and a stream identifier of the substream.

702: An AS sends the data stream, where a first substream in the at least two substreams in the data stream carries a first stream identifier.

703: A PCF receives correspondences between QoS requirements of the substreams and stream identifiers of the substreams in the at least two substreams in the data stream, and sends a policy control and charging PCC rule.

704: An SMF receives the PCC rule and sends a mapping rule. The mapping rule is generated based on the PCC rule, the mapping rule includes a mapping relationship between the first stream identifier and a first QFI, and a QoS requirement of the first substream corresponds to the first QFI.

705: A UPF receives the data stream, and obtains the first stream identifier of the first substream from the at least two substreams included in the data stream.

706: The UPF receives the mapping rule, maps, based on the mapping rule, the first substream to a first QoS flow indicated by the first QFI, and sends the first QoS flow, where QoS requirements or QoS requirement identifiers of a plurality of data substreams in the first substream are further encapsulated in the first QoS flow.

707: The SMF sends correspondences between the QoS requirements and QFIs of the substreams in the at least two substreams in the data stream. The correspondences include a correspondence between the QoS requirement of the first substream and the first QFI.

708: A RAN receives the correspondences between the QoS requirements and the QFIs of the substreams, receives the first QoS flow, and schedules, based on the QoS requirement of the first substream, the first QoS flow indicated by the first QFI.

Execution steps of the communication method are described above when the substream identifiers are stream identifiers, and the substreams that are indicated by the stream identifiers and that are in the data stream further includes a plurality of data substreams. For details about related descriptions, refer to the descriptions in FIG. 3A, FIG. 3B, and FIG. 5C. In the method, the stream identifiers are used for identifying data streams of three types, that is, a video stream, an audio stream, and a tactile stream. If data substreams with different sending sequences, different importance degrees, or different priorities are further included, a scheduling policy and QoS processing are differentiated by using encapsulation information encapsulated in the QoS flows. This process is specific only to data substreams that need differentiated QoS processing, and does not need to be specific to all data substreams. In this way, network utilization can be improved, and overheads in a data stream processing process can be reduced.

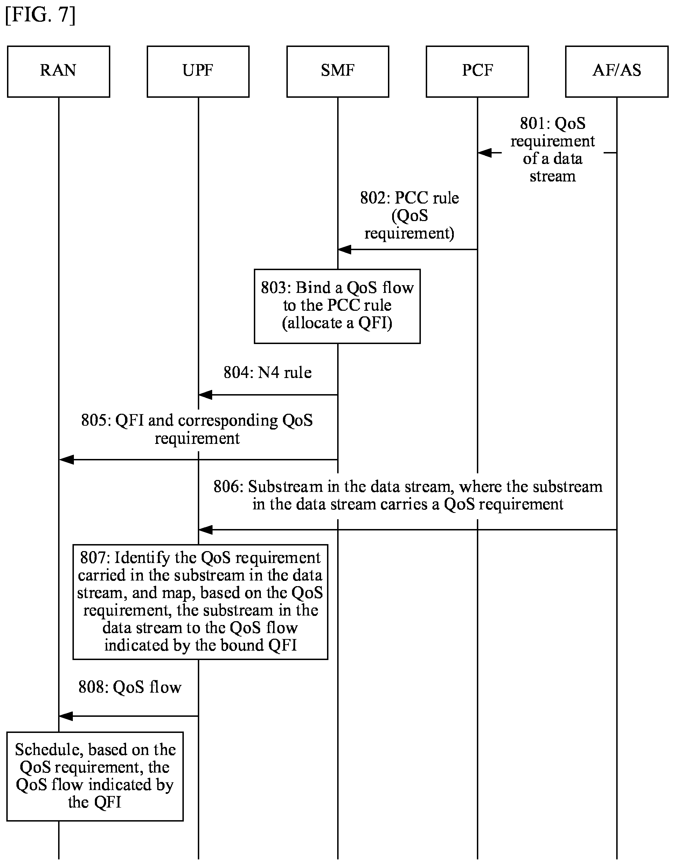

In some cases, the AF may directly include the QoS requirements of the substreams in the data stream in the substreams in the data stream for sending, so that the UPF directly maps, based on the QoS requirements, the substreams in the data stream to the QoS flows indicated by the QFIs. FIG. 7 is a flowchart of another communication method according to an embodiment of this application. As shown in FIG. 7, substream identifiers in the method are stream identifiers, and the method includes the following steps.

801: An AF sends a QoS requirement of a data stream.

802: A PCF receives the QoS requirement sent by the AF, and sends a PCC rule to an SMF. The PCC rule is generated based on the QoS requirement sent by the AF.

803: The SMF receives the PCC rule, binds a QoS flow to the PCC rule, and allocates a QoS flow identifier QFI.

In other words, the SMF determines a quantity of allocated QFIs based on a quantity of QoS requirements in the PCC rule.

804: The SMF sends an N4 rule. The N4 rule includes the bound QFI.

805: The SMF sends the QFI and a corresponding QoS requirement.

806: The AF sends a substream in the data stream, where the substream in the data stream carries a QoS requirement.

The substream in the data stream carries the QoS requirement. For example, the data stream is encapsulated and transmitted based on an MoQ protocol, and the QoS requirement may be extended in metadata. After receiving the substream in the data stream, a UPF reads, from the metadata, the QoS requirement corresponding to the substream in the data stream.

807: The UPF receives the N4 rule, receives the substream in the data stream, identifies the QoS requirement carried in the substream in the data stream, and maps, based on the QoS requirement, the substream in the data stream to the QoS flow indicated by the bound QFI.

The UPF determines a binding relationship between a QoS requirement and a QFI based on the received N4 rule, and obtains a corresponding QoS requirement from the substream in the data stream. Therefore, the UPF can learn that the substream in the data stream is mapped to the QFI bound to the QoS requirement of the substream, so that substreams with different QoS requirements are mapped to different QoS flows.

808: The UPF sends the QoS flow. Correspondingly, the RAN receives the QFI and the corresponding QoS requirement, receives the QoS flow, and schedules, based on the QoS requirement, the QoS flow indicated by the QFI.

After receiving the QFI and the corresponding QoS requirement that are sent by the SMF, the RAN determines, based on the QoS requirement, QoS processing on the QoS flow indicated by the QFI.

In the method, the AF includes the QoS requirement of the substream in the data stream in the substream in the data stream and sends the substream and the QoS requirement together, so that after receiving the substream in the data stream, the UPF can directly read a QoS requirement corresponding to each substream from the substream in the data stream, and can map, based on the binding relationship between a QoS requirement and a QFI of the substream, the substream to the QoS flow indicated by the QFI, to map the substreams with different QoS requirements to different QoS flows. In this way, the RAN can perform QoS processing based on the QoS requirement corresponding to each QoS flow, to improve network utilization and ensure network quality of service.

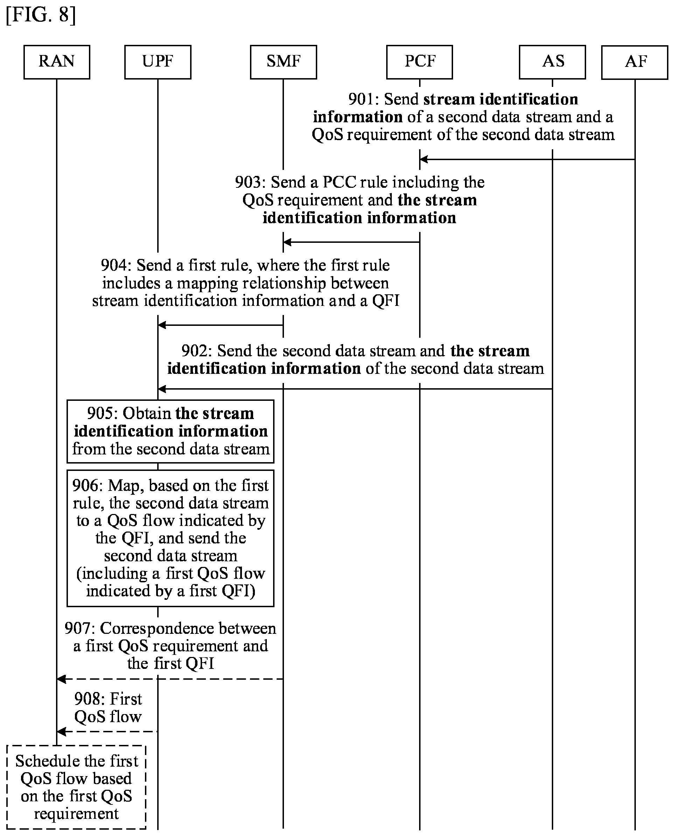

In some cases, the data stream may be identified by using stream identification information. FIG. 8 is a flowchart of another communication method according to an embodiment of this application. As shown in FIG. 8, the method includes the following steps.

901: An AF sends stream identification information of a second data stream and a QoS requirement of the second data stream.

The second data stream in this embodiment is a form in which data is transferred between different components. A service flow sent by a service running on an application server may be referred to as the second data stream, for example, a video stream corresponding to a video service or an audio stream corresponding to an audio service.

Optionally, the second data stream includes one or more substreams, and each substream corresponds to one piece of stream identification information.

The second data stream may include, for example, a video stream, an audio stream, or a tactile stream (or another data stream parallel to the three streams, where these streams may be referred to as data streams of different modalities or different types). The video stream may further include a data stream corresponding to an I frame or a P frame, a base layer or an enhancement layer, or the like. These data streams may be referred to as substreams. Each substream corresponds to one piece of stream identification information. In this case, the substreams may correspond to a same IP 5-tuple or an IP triplet. The IP 5-tuple includes a source IP address, a source port, a destination IP address, a destination port, and a transport layer protocol. Therefore, identification information that is of the second data stream and that is sent by the AF may be one piece of stream identification information (where no substream is divided, or only one substream or one type of substream is included), or may be a plurality of pieces of stream identification information (where the second data stream includes a plurality of substreams).

When the second data stream is transmitted based on an MoQ protocol, the stream identification information is information carried based on the MoQ protocol. Specifically, for example, the stream identification information is track (track) identification information. The track identification information may be a track id (track id), and is specifically represented as, for example, an identifier in a digital form (for example, in a form of 213134), a fully qualified domain name (fully qualified domain name, FQDN), or a uniform resource locator (uniform resource locator, URL). Alternatively, the track identification information may be a track identification name, and is specifically represented as, for example, hd-video, audio, or abc/audio. Alternatively, the track identification information may be other information that can identify the track, a track alias (track alias), or the like. The track identification information may be specifically represented as a character string. The track identifier may be transmitted as a part of flow description (flow description) information, or the track identification information may be independent of the flow description information. This is not specifically limited in this embodiment of this application.

Alternatively, when the second data stream is transmitted based on a tunneling protocol, the stream identification information may be information carried in the tunneling protocol. The tunneling protocol is, for example, a generic routing encapsulation (generic routing encapsulation, GRE) protocol, or the foregoing GPRS tunneling protocol (GPRS tunneling protocol, GTP). Specifically, for example, the stream identification information may be identification information that is carried in a tunnel and that may be used for identifying a service flow, a tunnel identifier (number) (id), a tunnel name, or a character string that is carried in the tunnel and that represents related information. Information carried in the tunneling protocol herein does not include information (for example, IP 5-tuple information in an IP header) carried in an IP data packet encapsulated in the tunnel for transmission.

When sending the stream identification information of the second data stream, the AF sends the QoS requirement corresponding to the second data stream. A correspondence between the stream identification information corresponding to the second data stream and the QoS requirement includes the following types:
a. a one-to-one relationship, where to be specific, both a quantity of pieces of data stream identification information and a quantity of QoS requirements are 1, and the two correspond to each other;
b. an N-to-N relationship, where both a quantity of pieces of data stream identification information and a quantity of QoS requirement types are N, and a substream identified by each piece of data stream identification information corresponds to one QoS requirement; and
c. an M-to-N relationship, where M is a quantity of pieces of stream identification information, N is a quantity of QoS requirement types, and N<M, to be specific, a case in which substreams identified by a plurality of pieces of stream identification information correspond to a same QoS requirement is included.

902: An AS sends the second data stream and the stream identification information of the second data stream.

The second data stream sent by the AS may carry the stream identification information.

It is assumed that the second data stream is transmitted based on the MoQ protocol. As described above, the stream identification information (for example, track identification information) may be carried in metadata (metadata).

It is assumed that the second data stream is transmitted based on the tunneling protocol. The second data stream and the stream identification information may be both carried in the tunneling protocol.

903: A PCF receives the QoS requirement and the stream identification information of the second data stream, and sends a policy control and charging PCC rule including the QoS requirement and the stream identification information.

904: An SMF receives the PCC rule, and sends a first rule. The first rule is generated based on the PCC rule, and the first rule includes a mapping relationship between stream identification information and a QFI.

In this embodiment, after receiving the PCC rule, the SMF learns of the QoS requirement and the stream identification information of the second data stream. A correspondence between the stream identification information and the QFI is generated, so that the second data stream is mapped to a QoS flow based on the stream identification information. A plurality of pieces of stream identification information may correspond to a same QFI, or may correspond to different QFIs. Assuming that the second data stream includes a plurality of substreams, and each substream corresponds to one piece of stream identification information, each substream may be mapped to a QoS flow indicated by one QFI, and a plurality of substreams may be mapped to a QoS flow indicated by a same QFI.

Specifically, the SMF may include a correspondence (the first rule) between a stream identifier and the QFI in a packet detection rule (packet detection rule, PDR) (or the first rule is the PDR), and send the data packet detection rule to a UPF.

905: The UPF receives the second data stream, and obtains the stream identification information from the second data stream.

As described above, the second data stream sent by the AS carries the stream identification information, and the UPF may also obtain the stream identification information from the received second data stream. It is assumed that the second data stream is transmitted based on the MoQ protocol, and the track identification information (stream identification information) may be obtained from original data.

Further, the UPF may first identify the data stream based on the IP 5-tuple, and then distinguish the data stream by using the data stream identification information.

It is assumed that the second data stream is transmitted based on the tunneling protocol, and the stream identification information may be obtained from the tunneling protocol.

906: The UPF receives the first rule, maps, based on the first rule, the second data stream to a QoS flow indicated by a QFI, and sends the second data stream. The sent second data stream includes a first QoS flow indicated by a first QFI.

The UPF maps the second data stream to the QoS flow based on the correspondence between the stream identification information and the QFI in the first rule (for example, the PDR).

In this application, that the second data stream is mapped to the QoS flow indicated by the QFI may be understood as that QFI information is inserted into a tunneling protocol header carrying the second data stream.

Alternatively, the second data stream may be mapped to the QoS flow based on the stream identification information. That the second data stream is mapped to the QoS flow may be understood as that QFI information corresponding to the QoS flow is inserted into a tunneling protocol header carrying the second data stream.

In the foregoing descriptions, the stream identification information corresponds to the QFI, but the second data stream or the substream identified by same stream identification information may correspond to one QoS requirement, or may correspond to a plurality of QoS requirements, or substreams identified by a plurality of pieces of stream identification information correspond to a same QoS requirement. Therefore, the following cases may be included.
(1) A substream with one QoS requirement is mapped to a QoS flow indicated by a same QFI.
   For example, a substream 1 is mapped to a QoS flow 1 indicated by a QFI 1, and the substream 1 corresponds to a QoS requirement 1. In other words, there is a correspondence (QoS flow 1, substream 1, QoS requirement 1).
(2) Substreams with a plurality of QoS requirements are mapped to a QoS flow indicated by a same QFI.
   For example, a substream 21 is mapped to a QoS flow 2 indicated by a QFI 2, and corresponds to a QoS requirement 21, and a substream 22 is also mapped to the QoS flow 2 indicated by the QFI 2, and corresponds to a QoS requirement 22. In other words, there are correspondences (QoS flow 2 (substream 21, QoS requirement 21), (substream 22, QoS requirement 22)).
(3) A plurality of substreams with a same QoS requirement are mapped to different QoS flows.

For example, a substream 3 is mapped to a QoS flow 3 indicated by a QFI 3, and corresponds to a QoS requirement 3. A substream 4 is mapped to a QoS flow 4 indicated by a QFI 4, and corresponds to a QoS requirement 3. A substream 5 is mapped to a QoS flow 5 indicated by a QFI 5, and corresponds to a QoS requirement 3. In other words, there are correspondences:
(QoS flow 3, substream 3, QoS requirement 3);
(QoS flow 4, substream 4, QoS requirement 3); and
(QoS flow 5, substream 5, QoS requirement 3).

907: The SMF sends the correspondence between the QoS requirement and the QFI of the second data stream, where the correspondence includes the correspondence between the first QoS requirement and the first QFI.

908: A RAN receives a correspondence between a QoS parameter (generated based on the QoS requirement or corresponding to the QoS requirement) and the QFI, receives the first QoS flow, and schedules, based on the first QoS requirement, the first QoS flow indicated by the first QFI.

The RAN may determine, based on the QoS requirement, a sequence of scheduling the QoS flow indicated by the QFI (to the UE) and a condition that needs to be satisfied for scheduling the QoS indicated by the QFI. For example, a QoS requirement corresponding to the QFI 1 is high, and when network quality is better, the RAN may schedule a QoS flow indicated by the QFI 1. Differentiated scheduling of the second data stream is implemented.

It can be learned that, in this embodiment of this application, the stream identification information that is sent by the AF and that is used for identifying the second data stream may be a single piece of stream identification information, or may be a plurality of pieces of stream identification information. The UPF maps the corresponding second data stream to one QoS flow based on the stream identification information, so that the RAN schedules the second data stream or the substream identified by the stream identification information, to ensure scheduling orderliness and efficiency. The stream identification information may be an identifier, a name, a character string, or the like, and a meaning of the stream identification information is extended.

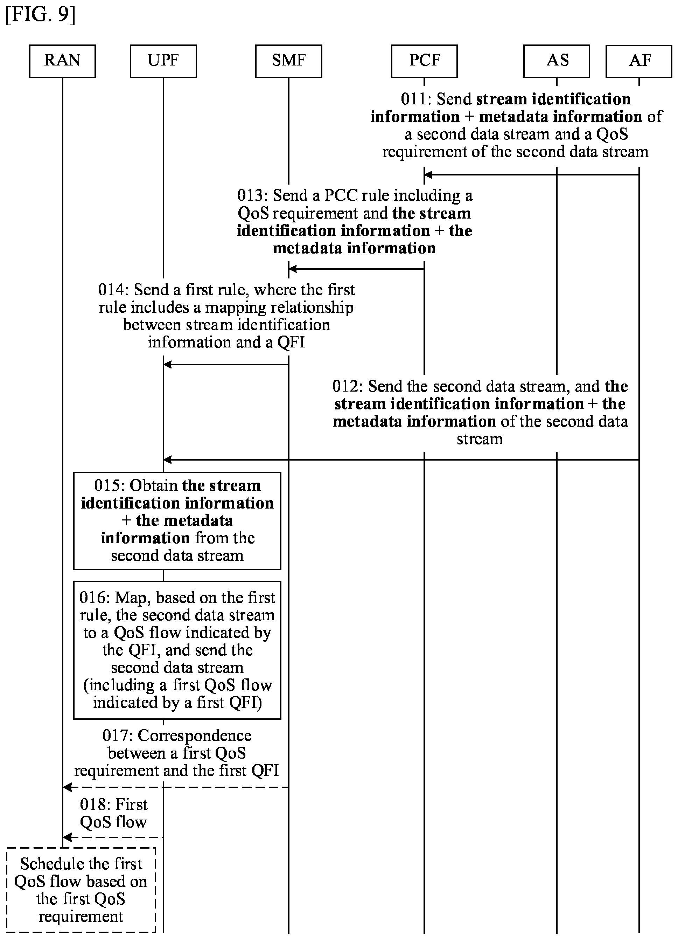

In some cases, the data stream may be identified by using the stream identification information and other metadata information. FIG. 9 is a flowchart of another communication method according to an embodiment of this application. As shown in FIG. 9, the method includes the following steps.

011: An AF sends stream identification information and metadata information of a second data stream and a QoS requirement of the second data stream.

When sending the stream identification information, the AF sends the QoS requirement corresponding to the second data stream. A correspondence between the stream identification information and the QoS requirement includes the following:
an N-to-M relationship, where N is a quantity of pieces of stream identification information, M is a quantity of QoS requirement types, and N<M, to be specific, a case in which substreams identified by same stream identification information correspond to a plurality of QoS requirements (for example, a video stream corresponds to same stream identification information, but an I frame and a P frame in the video stream correspond to different QoS requirements) is included.

In this case, if different substreams are distinguished only by using the stream identification information, substreams with different QoS requirements may not be fully split. Therefore, the second data stream may be more fully split by using the stream identification information + the metadata information.

012: An AS sends the second data stream, and the stream identification information and the metadata information of the second data stream.

013: A PCF receives the QoS requirement, the stream identification information, and the metadata information of the second data stream, and sends a policy control and charging PCC rule including the QoS requirement, the stream identification information, and the metadata information.

014: An SMF receives the PCC rule, and sends a first rule. The first rule is generated based on the PCC rule, and the first rule includes a mapping relationship between stream identification information and metadata information and a QFI (in other words, the PCC rule is bound to a QoS flow). The first rule may be included in a PDR, or the first rule is the PDR.

015: A UPF receives the second data stream, and obtains the stream identification information and the metadata information from the second data stream.

016: The UPF receives the first rule, maps, based on the first rule, the second data stream to the QoS flow indicated by the QFI, and sends the second data stream. The second data stream includes a first QoS flow indicated by a first QFI.

017: The SMF sends a correspondence between the QoS requirement and the QFI of the second data stream, where the correspondence includes a correspondence between the first QoS requirement and the first QFI.

018: A RAN receives a correspondence between a QoS parameter (corresponding to the QoS requirement) and the QFI, receives the first QoS flow, and schedules, based on the first QoS requirement, the first QoS flow indicated by the first QFI.

A difference between this embodiment and the foregoing embodiment corresponding to FIG. 8 lies in that (a substream of) the second data stream is identified by using the stream identification information and additional metadata information. The additional metadata information may be one or more types of information in metadata encapsulated and transmitted based on a media over QUIC MoQ protocol (media over QUIC transport, MOQT), and is specifically, for example, a group sequence (group sequence), an object sequence (object Sequence), or an object send order (object send order) (as shown in FIG. 3B). Alternatively, the additional metadata information may be other information newly added to the metadata. The same as the descriptions in FIG. 8, the stream identification information + the metadata information may be a part of flow description (flow description) information, or may be independent of the flow description information.

Substreams in the second data stream are identified by using the stream identification information + the metadata information. This may be used for further distinguishing between substreams with same stream identification information. For example, for a video stream, the video stream corresponds to same track identification information, but an I frame and a P frame in the video stream correspond to different object send orders. The substreams in the second data stream can be further distinguished by using the stream identification information + the metadata information, so that substreams with different QoS requirements can be respectively mapped to different QoS flows, to further improve effectiveness of differentiated scheduling performed by the RAN on the QoS flows.

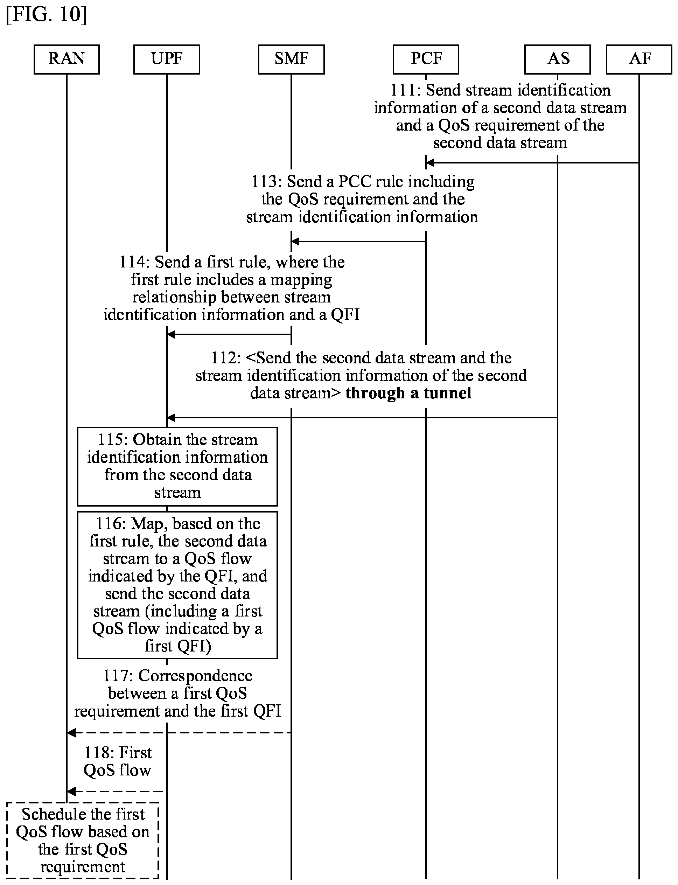

In some cases, the data stream sent by the AS may be carried through a tunnel. FIG. 10 is a flowchart of another communication method according to an embodiment of this application. As shown in FIG. 10, the method includes the following steps.

111: An AF sends stream identification information of a second data stream and a QoS requirement of the second data stream.

112: An AS sends the second data stream and the stream identification information of the second data stream through a tunnel.

113: A PCF receives the QoS requirement and the stream identification information of the second data stream, and sends a policy control and charging PCC rule including the QoS requirement and the stream identification information.

114: An SMF receives the PCC rule, and sends a first rule. The first rule is generated based on the PCC rule, and the first rule includes a mapping relationship between stream identification information and a QFI. The first rule may be included in a PDR, or the first rule is the PDR.

115: A UPF receives the second data stream, and obtains the stream identification information from the second data stream.

The UPF serves as an endpoint of the tunnel, obtains the second data stream in the tunnel, and identifies the stream identification information of the second data stream.

116: The UPF receives the first rule, maps, based on the first rule, the second data stream to a QoS flow indicated by the QFI, and sends the second data stream. The sent second data stream includes a first QoS flow indicated by a first QFI.

The UPF obtains stream identification information from the first rule (which may be specifically the PDR), matches the stream identification information with the stream identification information identified from the second data stream, and transmits the matched second data stream (substream) by using a QoS flow indicated by a corresponding QFI.

117: The SMF sends a correspondence between the QoS requirement and the QFI of the second data stream, where the correspondence includes a correspondence between the first QoS requirement and the first QFI.

118: A RAN receives a correspondence between a QoS parameter (corresponding to the QoS requirement) and the QFI, receives the first QoS flow, and schedules, based on the first QoS requirement, the first QoS flow indicated by the first QFI.

In this embodiment of this application, a case in which the second data stream is sent based on the tunnel is described. In addition, the stream identification information (for example, the track id described above) may also be carried in a tunnel header for sending. In a transmission process in the tunnel, a tunnel between two network elements is uniquely determined based on an endpoint of the tunnel. Therefore, transmission efficiency and security of the second data stream can be improved by transmitting the second data stream through the tunnel. In addition, the stream identification information is carried in the tunnel header for sending, so that efficiency of obtaining the stream identification information is not affected. Overall, security and reliability in a mapping process of the second data stream are improved.

It should be noted that, in this embodiment, the second data stream is sent based on the tunnel, and may be applied to any one of the embodiments corresponding to FIG. 3A to FIG. 9 (in other words, the substream identifier may be any one of the substream identifiers mentioned in the foregoing embodiment). Details are not described herein again. In addition to sending the second data stream through the tunnel, the second data stream may be sent by using a data packet (package) in the foregoing embodiment. Details are not described herein again.

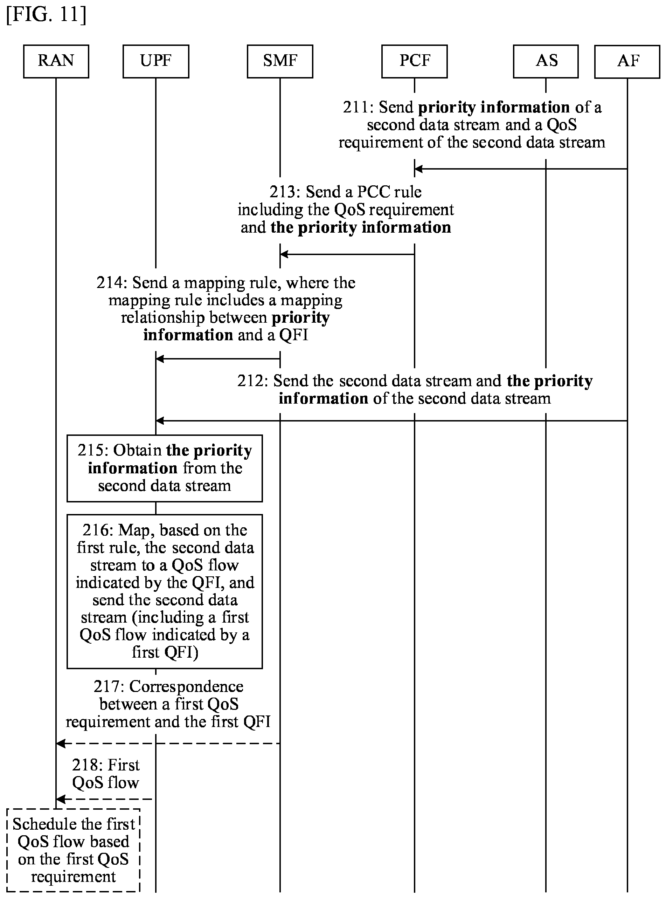

In some cases, a data stream may be identified by using priority information. FIG. 11 is a flowchart of another communication method according to an embodiment of this application. As shown in FIG. 11, the method includes the following steps.

211: An AF sends priority information of a second data stream and a QoS requirement of the second data stream.

In this embodiment, the second data stream or a substream in the second data stream is identified by the priority information. Same priority information may identify one or more substreams. For example, an audio stream and a tactile stream (where QoS requirements may be the same or may be different) may correspond to first priority information, and a video stream may correspond to second priority information. Alternatively, an I frame in a video stream corresponds to first priority information, and a P frame in the video stream corresponds to second priority information.

212: An AS sends the second data stream and the priority information of the second data stream.

The AS may send the second data stream by using a data packet, or may send the second data stream through a tunnel.

213: A PCF receives the QoS requirement of the second data stream and the priority information of the second data stream, and sends a policy control and charging PCC rule including the QoS requirement and the priority information of the second data stream.

214: An SMF receives the PCC rule, and sends a first rule. The first rule is generated based on the PCC rule, and the first rule includes a mapping relationship between priority information and a QFI. The first rule may be included in a PDR, or the first rule is the PDR.

215: A UPF receives the second data stream, and obtains the priority information of the second data stream from the second data stream.

216: The UPF receives the first rule, maps, based on the first rule, the second data stream to the QoS flow indicated by the QFI, and sends the second data stream. The sent second data stream includes a first QoS flow indicated by a first QFI.

217: The SMF sends a correspondence between the QoS requirement and the QFI of the second data stream, where the correspondence includes a correspondence between the first QoS requirement and the first QFI.

218: A RAN receives a correspondence between a QoS parameter (corresponding to the QoS requirement) and the QFI, receives the first QoS flow, and schedules, based on the first QoS requirement, the first QoS flow indicated by the first QFI.

In this embodiment of this application, a case in which the second data stream or the substream in the second data stream is identified by the priority information is described. In the implementation, the substream in the second data stream may be divided at any granularity, in other words, any substreams with different QoS requirements may be split or combined for identification, to improve flexibility of performing differentiated QoS flow mapping on the substream in the second data stream based on stream identification information, and further ensure reliability of QoS flow scheduling.

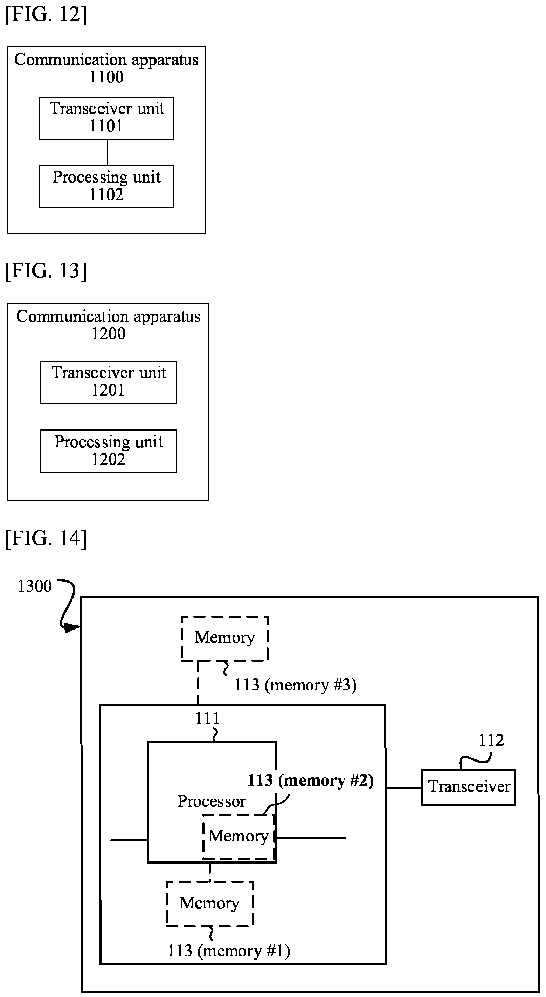

FIG. 12 is a diagram of a structure of a communication apparatus. An implementation of this application further provides a communication apparatus 1100. The communication apparatus 1100 may be a UPF entity, or may be used in the UPF entity. The communication apparatus 1100 includes a transceiver unit 1101 and a processing unit 1102. The transceiver unit 1101 may be or may be a unit or a module that can implement an information receiving and sending function, for example, a transceiver, a transceiver antenna, or an input/output interface. The processing unit 1102 may be or may be deployed in a processor.

The transceiver unit 1101 is configured to receive a data stream, where the data stream includes at least two substreams, the at least two substreams correspond to a same 5-tuple, and substreams in the at least two substreams correspond to different substream identifiers.

The processing unit 1102 is configured to obtain a first substream identifier of a first substream from the at least two substreams included in the data stream.

The processing unit 1102 is further configured to map the first substream to a first quality of service QoS flow indicated by a first QoS flow identifier QFI corresponding to the first substream identifier.

Optionally, the transceiver unit 1101 is further configured to receive a mapping rule, where the mapping rule includes a correspondence between the first substream identifier and the first QFI. The processing unit is specifically configured to map, based on the mapping rule, the first substream to the first quality of service QoS flow indicated by the first QoS flow identifier QFI corresponding to the first substream identifier.

Optionally, the processing unit 1102 is further configured to obtain a second substream identifier of the second substream from the at least two substreams included in the data stream; and map the second substream to a second QoS flow indicated by a second QFI corresponding to the second substream identifier.

Optionally, the transceiver unit 1101 is further configured to receive first information, where the first information indicates that a protocol used by the data stream is an MoQ protocol and/or indicates to obtain the substream identifier.

Optionally, the data stream is encapsulated and transmitted based on a quick user datagram protocol internet connection QUIC protocol.

Optionally, the data stream is encapsulated and transmitted based on the media over QUIC MoQ protocol.

Optionally, the substream identifier is a track identifier, and the substreams in the data stream correspond to video streams, audio streams, or tactile streams in a same service when encapsulation and transmission are based on the MoQ protocol.

Optionally, the substream identifier is a stream identifier, and the substreams in the data stream correspond to video streams, audio streams, or tactile streams in a same service when encapsulation and transmission are based on the QUIC protocol.

Optionally, the substream identifier is a sequence identifier, and the substreams in the data stream correspond to data substreams obtained by mapping data sets with different importance degrees or different priorities in a same data stream.

Optionally, the substream identifier is a data substream identifier, and the substreams in the data stream correspond to data substreams obtained by mapping data sets with different importance degrees or different priorities in different data streams.

Optionally, the data substream identifier or the sequence identifier is carried in metadata of an MoQ packet including the data stream.

Optionally, the first substream includes data substreams obtained by mapping data sets with different importance degrees or different priorities, and the first QoS flow further corresponds to a scheduling policy of a plurality of data substreams.

Optionally, QoS requirements or QoS requirement identifiers of the plurality of data substreams in the first substream are correspondingly encapsulated in a general packet radio service GPRS tunnel transmission protocol GTP-U header of the first QoS flow.

Optionally, the first information is at least one of the following: a protocol description field, a transmission indication of transmission using the MoQ protocol, an indication identifier indicating to obtain the substream identifier, a QoS parameter of a protocol data unit PDU set, or a PDU set granularity transmission indication.

In a possible case, the communication apparatus 1100 may further include:
the transceiver unit 1101, configured to receive a second data stream and stream identification information corresponding to the second data stream, where the stream identification information is used for identifying the second data stream, and the stream identification information is information carried based on a media over QUIC MoQ protocol or information carried in a tunneling protocol; and
the processing unit 1102 is configured to map the second data stream to the first QoS flow based on the stream identification information.

Optionally, the second data stream includes one or more substreams, the one or more substreams correspond to a same IP 5-tuple, and each substream corresponds to one piece of stream identification information; and mapping the second data stream to the QoS flow based on the stream identification information includes: mapping each substream to the QoS flow based on the stream identification information corresponding to the substream.

Optionally, before mapping the second data stream to the first QoS flow, the transceiver unit is further configured to: receive a first rule, where the first rule includes the stream identification information and a QFI corresponding to the stream identification information; and mapping the second data stream to the QoS flow based on the stream identification information includes: mapping, based on the first rule, the second data stream to the QoS flow indicated by the QFI corresponding to the stream identification information.

Optionally, the second data stream is transmitted based on a tunnel or based on the MoQ protocol.

Optionally, when the second data stream is transmitted based on the tunnel, the stream identification information is identification information carried in the tunneling protocol, and both the second data stream and the stream identification information are carried in the tunneling protocol.

Optionally, when the second data stream is transmitted based on the MoQ protocol, the stream identification information is track identification information, and the track identification information is in one or more of the following forms: an identifier, a name, or a character string.

FIG. 13 is a diagram of a structure of a communication apparatus. This application further provides a communication apparatus 1200. The transmission apparatus may be but is not limited to an SMF entity, or may be used in, but not limited to, the SMF entity. The communication apparatus may include a transceiver unit 1201 and a processing unit 1202. The transceiver unit 1201 may be or may be a unit or a module that can implement an information receiving and sending function, s for example, a transceiver, a transceiver antenna, or an input/output interface. The processing unit 1202 may be or may be deployed in a processor.

The transceiver unit 1201 is configured to receive a policy and charging control PCC rule, where the PCC rule includes a correspondence between at least one quality of service QoS requirement and a first substream identifier of a first substream in at least two substreams in a data stream, and the first substream identifier is a substream identifier of the first substream.

The processing unit 1202 is configured to generate a mapping rule based on the PCC rule.

The transceiver unit 1201 is further configured to send the mapping rule, where the mapping rule includes a correspondence between the first substream identifier and a first QoS flow identifier QFI, and the at least one QoS requirement of the first substream corresponds to the first QFI.

Optionally, the transceiver unit 1201 is further configured to send first information, where the first information indicates that a protocol used by the data stream is an MoQ protocol and/or indicates to obtain the substream identifier.

Optionally, the transceiver unit 1201 is further configured to receive second information, where the second information indicates that the protocol used by the data stream is the MoQ protocol and/or indicates to obtain the substream identifier, and the first information is generated based on the second information.

Optionally, the data stream is encapsulated and transmitted based on a quick user datagram protocol internet connection QUIC protocol.

Optionally, the data stream is encapsulated and transmitted based on the media over QUIC MoQ protocol.

Optionally, the substream identifier is a track identifier, and the substreams in the data stream correspond to video streams, audio streams, or tactile streams in a same service when encapsulation and transmission are based on the MoQ protocol.

Optionally, the substream identifier is a stream identifier, and the substreams in the data stream correspond to video streams, audio streams, or tactile streams in a same service when encapsulation and transmission are based on the QUIC protocol.

Optionally, the substream identifier is a sequence identifier, and the substreams in the data stream correspond to data substreams obtained by mapping data sets with different importance degrees or different priorities in a same data stream.

Optionally, the substream identifier is a data substream identifier, and the substreams in the data stream correspond to data substreams obtained by mapping data sets with different importance degrees or different priorities in different data streams.

Optionally, the data substream identifier or the sequence identifier is carried in metadata of an MoQ packet including the data stream.

Optionally, when a same data stream includes data substreams obtained by mapping data sets with different importance degrees or different priorities, QoS flows indicated by QFIs corresponding to the substream identifiers further correspond to scheduling policies of a plurality of data substreams.

Optionally, QoS requirements or QoS requirement identifiers of a plurality of data substreams in a same data stream are correspondingly encapsulated in a general packet radio service GPRS tunnel transmission protocol GTP-U header of the QoS flow of the data stream.

In a possible case, the communication apparatus 1100 may further include:
the transceiver unit 1201, configured to receive a policy and charging control PCC rule, where the PCC rule includes stream identification information and a quality of service QoS requirement corresponding to the stream identification information, and the stream identification information is information carried based on a media over QUIC MoQ protocol or information carried in a tunneling protocol; and
the transceiver unit 1201, further configured to send a first rule, where the first rule is generated based on the PCC rule, and the first rule includes the stream identification information and a QoS flow identifier QFI corresponding to the stream identification information.

FIG. 14 is a diagram of a hardware structure of a communication apparatus 1300 according to an embodiment of this application. For a structure of the communication apparatus 1100 or the communication apparatus 1200, refer to the structure shown in FIG. 14. The communication apparatus 1300 includes a processor 111 and a transceiver 112. The processor 111 and the transceiver 112 are electrically coupled.

The processor 111 is configured to execute a part or all of computer program instructions in a memory. When the part or all of the computer program instructions are executed, the apparatus is caused to perform the method according to any one of the foregoing embodiments.

The transceiver 112 is configured to communicate with another device. For example, a network device sends first information and second information to a terminal, and the terminal receives the first information and the second information that are sent by the network device.

Optionally, the apparatus further includes a memory 113, configured to store computer program instructions. Optionally, the memory 113 (a memory #1) is located inside the apparatus, the memory 113 (a memory #2) is integrated with the processor 111, or the memory 113 (a memory #3) is located outside the apparatus.

It should be understood that the communication apparatus 1300 shown in FIG. 14 may be a chip or a circuit, for example, a chip or a circuit that may be disposed in a terminal apparatus or a communication apparatus. The transceiver 112 may alternatively be a communication interface. The transceiver includes a receiver and a transmitter. Further, the communication apparatus 1300 may further include a bus system.

The processor 111, the memory 113, and the transceiver 112 are connected through the bus system. The processor 111 is configured to execute the instructions stored in the memory 113, to control the transceiver to receive and send signals, and complete steps of a transmit end or a receive end in the implementation method in this application. The memory 113 may be integrated into the processor 111, or may be disposed separately from the processor 111.

In an implementation, a function of the transceiver 112 may be implemented by using a transceiver circuit or a dedicated transceiver chip. It may be considered that the processor 111 is implemented by using a dedicated processing chip, processing circuit, or processor, or a universal chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another appropriate type.

An embodiment of this application provides a computer storage medium, storing a computer program. The computer program includes instructions for performing the method corresponding to a transmit end or a receive end in the foregoing embodiment.

An embodiment of this application provides a computer program product including instructions. When the computer program product runs on a computer, the computer is caused to perform the method corresponding to the transmit end or the receive end in the foregoing embodiment.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a user plane function UPF entity, wherein the method comprises:
receiving a data stream, wherein the data stream comprises at least two substreams, the at least two substreams correspond to a same 5-tuple, and substreams in the at least two substreams correspond to different substream identifiers;
obtaining a first substream identifier of a first substream from the at least two substreams comprised in the data stream; and
mapping the first substream to a first quality of service QoS flow indicated by a first QoS flow identifier QFI corresponding to the first substream identifier.

2. The method according to claim 1, wherein before mapping the first substream in the at least two substreams to a QoS flow indicated by a QoS flow identifier QFI corresponding to a substream identifier, the method further comprises:
receiving a mapping rule, wherein the mapping rule comprises a correspondence between the first substream identifier and the first QFI; and
mapping the first substream to the first quality of service QoS flow indicated by the first QoS flow identifier QFI corresponding to the first substream identifier comprises:
mapping, based on the mapping rule, the first substream to the first QoS flow indicated by the first QFI corresponding to the first substream identifier.

3. The method according to claim 1 or 2, wherein the data stream is encapsulated and transmitted based on a quick user datagram protocol internet connection QUIC protocol.

4. The method according to any one of claims 1 to 3, wherein the data stream is encapsulated and transmitted based on a media over QUIC MoQ protocol.

5. The method according to claim 3, wherein the substream identifier is a track identifier, and the substreams in the data stream correspond to video streams, audio streams, or tactile streams in a same service when encapsulation and transmission are based on the MoQ protocol.

6. The method according to claim 4, wherein the substream identifier is a stream identifier, and the substreams in the data stream correspond to video streams, audio streams, or tactile streams in a same service when encapsulation and transmission are based on the QUIC protocol.

7. The method according to any one of claims 1 to 5, wherein the substream identifier is a sequence identifier, and the substreams in the data stream correspond to data substreams obtained by mapping data sets with different importance degrees or different priorities in a same data stream.

8. The method according to any one of claims 1 to 4, wherein the substream identifier is a data substream identifier, and the substreams in the data stream correspond to data substreams obtained by mapping data sets with different importance degrees or different priorities in different data streams.

9. The method according to claim 7 or 8, wherein the data substream identifier or the sequence identifier is carried in metadata of an MoQ packet comprising the data stream.

10. The method according to claim 5 or 6, wherein when the first substream comprises a plurality of data substreams obtained by mapping data sets with different importance degrees or different priorities, the first QoS flow further corresponds to a scheduling policy of the plurality of data substreams.

11. The method according to claim 10, wherein QoS requirements or QoS requirement identifiers of the plurality of data substreams in the first substream are encapsulated in a general packet radio service GPRS tunnel transmission protocol GTP-U header of the first QoS flow.

12. The method according to any one of claims 1 to 11, wherein before obtaining a substream identifier of the first substream from the data stream, the method further comprises:
receiving first information, wherein the first information indicates that a protocol used by the data stream is the MoQ protocol and/or indicates to obtain the substream identifier.

13. The method according to claim 12, wherein the first information is at least one of the following:
a protocol description field, a transmission indication of transmission using the MoQ protocol, an indication identifier indicating to obtain the substream identifier, a QoS parameter of a protocol data unit PDU set, or a PDU set granularity transmission indication.

14. The method according to any one of claims 1 to 13, wherein the method further comprises:
obtaining a second substream identifier of a second substream from the at least two substreams comprised in the data stream; and
mapping the second substream to a second QoS flow indicated by a second QFI corresponding to the second substream identifier.

15. A communication method, applied to a session management SMF entity, wherein the method comprises:
receiving a policy and charging control PCC rule, wherein the PCC rule comprises a correspondence between at least one quality of service QoS requirement and a first substream identifier of a first substream in at least two substreams in a data stream, and the first substream identifier is a substream identifier of the first substream; and
sending a mapping rule, wherein the mapping rule is generated based on the PCC rule, the mapping rule comprises a correspondence between the first substream identifier and a first QoS flow identifier QFI, and the at least one QoS requirement of the first substream corresponds to the first QFI.

16. The method according to claim 15, wherein the data stream is encapsulated and transmitted based on a quick user datagram protocol internet connection QUIC protocol.

17. The method according to claim 15 or 16, wherein the data stream is encapsulated and transmitted based on a media over QUIC MoQ protocol.

18. The method according to claim 16, wherein the substream identifier is a track identifier, and the substreams in the data stream correspond to video streams, audio streams, or tactile streams in a same service when encapsulation and transmission are based on the MoQ protocol.

19. The method according to claim 17, wherein the substream identifier is a stream identifier, and the substreams in the data stream correspond to video streams, audio streams, or tactile streams in a same service when encapsulation and transmission are based on the QUIC protocol.

20. The method according to any one of claims 15 to 18, wherein the substream identifier is a sequence identifier, and the substreams in the data stream correspond to data substreams obtained by mapping data sets with different importance degrees or different priorities in a same data stream.

21. The method according to any one of claims 15 to 17, wherein the substream identifier is a data substream identifier, and the substreams in the data stream correspond to data substreams obtained by mapping data sets with different importance degrees or different priorities in different data streams.

22. The method according to claim 20 or 21, wherein the data substream identifier or the sequence identifier is carried in metadata of an MoQ packet comprising the data stream.

23. The method according to any one of claims 15 to 22, wherein the method further comprises:
sending first information, wherein the first information indicates that a protocol used by the data stream is the MoQ protocol and/or indicates to obtain the substream identifier.

24. The method according to claim 23, wherein before sending first information, the method further comprises: receiving second information, wherein the second information indicates that the protocol used by the data stream is the MoQ protocol and/or indicates to obtain the substream identifier, and the first information is generated based on the second information.

25. A communication method, applied to a user plane function UPF entity, wherein the method comprises:
receiving a second data stream and stream identification information corresponding to the second data stream, wherein the stream identification information is used for identifying the second data stream, and the stream identification information is information carried based on a media over QUIC MoQ protocol or information carried in a tunneling protocol; and
mapping the second data stream to a QoS flow based on the stream identification information.

26. The method according to claim 25, wherein the second data stream comprises one or more substreams, the one or more substreams correspond to a same IP 5-tuple, and each substream corresponds to one piece of stream identification information; and mapping the data stream to the QoS flow based on the stream identification information comprises: mapping each substream to the QoS flow based on the stream identification information corresponding to the substream.

27. The method according to claim 25 or 26, wherein before mapping the second data stream to the QoS flow, the method further comprises:
receiving a first rule, wherein the first rule comprises the stream identification information and a QFI corresponding to the stream identification information, and the QFI is used for identifying the QoS flow; and
mapping the second data stream to the QoS flow based on the stream identification information comprises:
mapping, based on the first rule, the second data stream to the QoS flow indicated by the QFI corresponding to the stream identification information.

28. The method according to any one of claims 25 to 27, wherein the second data stream is transmitted based on a tunnel or based on the MoQ protocol.

29. The method according to claim 28, wherein when the second data stream is transmitted based on the tunnel, the stream identification information is identification information carried in the tunneling protocol, and both the second data stream and the stream identification information are carried in the tunneling protocol.

30. The method according to claim 28, wherein when the second data stream is transmitted based on the MoQ protocol, the stream identification information is track identification information, and the track identification information is in one or more of the following forms: an identifier, a name, or a character string.

31. A communication method, applied to a session management SMF entity, wherein the method comprises:
receiving a policy and charging control PCC rule, wherein the PCC rule comprises stream identification information and a quality of service QoS requirement corresponding to the stream identification information, and the stream identification information is information carried based on a media over QUIC MoQ protocol or information carried in a tunneling protocol; and
sending a first rule, wherein the first rule is generated based on the PCC rule, and the first rule comprises the stream identification information and a QoS flow identifier QFI corresponding to the stream identification information.

32. A communication apparatus, wherein the apparatus comprises:
a transceiver unit, configured to receive a data stream, wherein the data stream comprises at least two substreams, the at least two substreams correspond to a same 5-tuple, and substreams in the at least two substreams correspond to different substream identifiers; and
a processing unit, configured to obtain a first substream identifier of a first substream from the at least two substreams comprised in the data stream, wherein the processing unit is further configured to map the first substream to a first quality of service QoS flow indicated by a first QoS flow identifier QFI corresponding to the first substream identifier.

33. The apparatus according to claim 32, wherein the transceiver unit is further configured to:
receive a mapping rule, wherein the mapping rule comprises a correspondence between the first substream identifier and the first QFI; and
the processing unit is specifically configured to map, based on the mapping rule, the first substream to the first quality of service QoS flow indicated by the first QoS flow identifier QFI corresponding to the first substream identifier.

34. The apparatus according to claim 32 or 33, wherein the transceiver unit is further configured to:
receive first information, wherein the first information indicates that a protocol used by the data stream is an MoQ protocol and/or indicates to obtain the substream identifier.

35. The apparatus according to any one of claims 32 to 34, wherein the processing unit is further configured to:
obtain a second substream identifier of a second substream from the at least two substreams comprised in the data stream; and
map the second substream to a second QoS flow indicated by a second QFI corresponding to the second substream identifier.

36. A communication apparatus, wherein the apparatus comprises:
a transceiver unit, configured to receive a policy and charging control PCC rule, wherein the PCC rule comprises a correspondence between at least one quality of service QoS requirement and a first substream identifier of a first substream in at least two substreams in a data stream, and the first substream identifier is a substream identifier of the first substream; and
a processing unit, configured to generate a mapping rule based on the PCC rule, wherein
the transceiver unit is further configured to send the mapping rule, wherein the mapping rule comprises a correspondence between the first substream identifier and a first QoS flow identifier QFI, and the at least one QoS requirement of the first substream corresponds to the first QFI.

37. The apparatus according to claim 36, wherein the transceiver unit is further configured to:
send first information, wherein the first information indicates that a protocol used by the data stream is the MoQ protocol and/or indicates to obtain the substream identifier.

38. The apparatus according to claim 37, wherein the transceiver unit is further configured to receive second information, wherein the second information indicates that the protocol used by the data stream is the MoQ protocol and/or indicates to obtain the substream identifier, and the first information is generated based on the second information.

39. A communication apparatus, wherein the apparatus is configured to perform the method according to any one of claims 25 to 30, or perform the method according to claim 31.

40. A wireless communication function entity, comprising a processor, wherein the processor is coupled to a memory, the memory is configured to store computer instructions, and the processor executes the computer instructions, to cause the entity to perform the method according to any one of claims 1 to 14, the entity to perform the method according to any one of claims 15 to 24, or the entity to perform the method according to any one of claims 25 to 31.

41. A communication system, comprising the transmission apparatus according to any one of claims 32 to 35 and the transmission apparatus according to any one of claims 36 to 38.

42. A computer-readable storage medium, wherein the computer-readable storage medium stores computer instructions, and the computer instructions instruct a communication device to perform the method according to any one of claims 1 to 14, the computer instructions instruct a communication device to perform the method according to any one of claims 15 to 24, or the computer instructions instruct a communication device to perform the method according to any one of claims 25 to 31.

43. A circuit, comprising a processor and an interface, configured to execute a computer program or instructions stored in a memory, to perform the method according to any one of claims 1 to 14, perform the method according to any one of claims 15 to 24, or perform the method according to any one of claims 25 to 31.
